# EUROPEAN PATENT APPLICATION

(11) **EP 4 563 653 A1**
(43) Date of publication of application: **04.06.2025**
(21) Application number: 23846486.1
(22) Date of filing: 25.07.2023
(51) Int. Cl.: C08L 53/02, B32B 27/00, B32B 27/30, B32B 27/40, C08F 8/04, C08F 8/46, C08F 293/00, C08F 297/04, C08L 53/00, C08L 75/04

(54) **RESIN COMPOSITION, MOLDED BODY, MULTILAYER STRUCTURE, AND METHOD FOR PRODUCING MULTILAYER STRUCTURE**

(30) Priority: 25.07.2022 JP 2022117905; 28.12.2022 JP 2022211316
(71) Applicant: Kuraray Co., Ltd., Kurashiki-shi, Okayama 710-0801 (JP)
(72) Inventor: KATO, Masahiro, Kamisu-shi, Ibaraki 314-0197 (JP); KONISHI, Daisuke, Kamisu-shi, Ibaraki 314-0197 (JP); KANEKO, Shuhei, Kamisu-shi, Ibaraki 314-0197 (JP)
(74) Representative: Müller-Boré & Partner Patentanwälte PartG mbB
(86) International application number: PCT/JP2023/027084
(87) International publication number: WO 2024/024756

(57) **Abstract**

A resin composition comprising: a modified hydrogenated product (A) of a block copolymer comprising a polymer block (A-1) having a structural unit derived from an aromatic vinyl compound and a polymer block (A-2) having a structural unit derived from a conjugated diene compound, and a resin (B), in which the modified hydrogenated product (A) has at least one functional group selected from the group consisting of a carboxy group, an amino group, a hydroxy group, and an acid anhydride-derived group, and the polymer block (A-2) has a vinyl bonding amount of 50 to 99 mol%, the resin (B) is at least one selected from the group consisting of an acrylic-based block copolymer and a thermoplastic polyurethane resin, a mass ratio (A)/(B) of the modified hydrogenated product (A) to the resin (B) is 90/10 to 10/90, and a melt flow rate measured under conditions of a temperature of 230°C and a load of 21 N in accordance with JIS K7210:2014 is 5 g/10 minutes or more.

## Description

### Technical Field

The present invention relates to a resin composition, a molded body, a multilayer structure, and a method for producing a multilayer structure.

### Background Art

It is known that a block copolymer having a styrene-based polymer block and a conjugated diene-based polymer block; and a hydrogenated product thereof are thermoplastic and easy to perform molding process, and further can be used as a compatibilizer. Further, it is also known that the block copolymer and/or a hydrogenated product thereof exhibit(s) melt adhesiveness to a synthetic resin and a metal when blended with a specific addition polymerization-based polymer block and a polyurethane-based block copolymer having a polyurethane block made of a polyurethane elastomer to form a resin composition (for example, PTLs 1 to 3).

In addition, in order to further improve the adhesive force to a synthetic resin and a metal, a resin composition containing the block copolymer and/or a hydrogenated product thereof have been improved. As one of the improvement methods, for example, a technique of using a modified polymer obtained by modifying the block copolymer and/or a hydrogenated product thereof to introduce a functional group having reactivity is known (for example, PTLs 4 to 6).

### Citation List

### Patent Literature

PTL 1: JPH11-302495A
PTL 2: JP2003-041089A
PTL 3: JP2004-346109A
PTL 4: JP2018-024776A
PTL 5: JP2021-181561A
PTL 6: WO2021/215255

### Summary of Invention

### Technical Problem

According to the techniques using a modified polymer of PTLs 4 to 6 and the like, it can be seen that the adhesive force to a synthetic resin or a metal having high polarity is improved. However, the application field of the block copolymer or a hydrogenated product thereof is widened, and further improvement of the adhesive force is desired so as to be suitable for various applications. In addition, it is desired to be excellent in physical properties such as flexibility, tensile properties and molding processability, which are required as a plastic material.

For example, in over-molding by injection molding, it is not easy to exhibit excellent adhesion to both a metal and a synthetic resin. Specifically, the resin composition disclosed in PTL 4 needs to be injection-molded at a high temperature of 260°C as described in Examples in order to exhibit excellent adhesive force. However, there is a concern that injection molding at such a high temperature deteriorates physical properties such as tensile elongation and hue. On the other hand, when the resin composition of the related art is injection-molded at a temperature lower than 260°C (for example, about 230°C) in order to exhibit excellent tensile properties such as tensile elongation, there is a concern that the adhesive force is reduced. Under such circumstances, a resin composition containing the block copolymer and/or a hydrogenated product thereof is desired to have both excellent adhesive force and excellent tensile properties such as tensile elongation.

Therefore, an object of the present invention is to provide a resin composition, a molded body, a multilayer structure, and a method for producing a multilayer structure, which are excellent in tensile properties and have strong adhesive force to a synthetic resin, a metal, and the like.

### Solution to Problem

As a result of intensive studies to solve the above problems, the present inventors have conceived the following present invention and found that the problems can be solved.

That is, the present invention is as follows.

[1] A resin composition comprising: a modified hydrogenated product (A) of a block copolymer comprising a polymer block (A-1) having a structural unit derived from an aromatic vinyl compound and a polymer block (A-2) having a structural unit derived from a conjugated diene compound, and a resin (B),
   in which the modified hydrogenated product (A) has at least one functional group selected from the group consisting of a carboxy group, an amino group, a hydroxy group, and an acid anhydride-derived group, and the polymer block (A-2) has a vinyl bonding amount of 50 to 99 mol%,
   the resin (B) is at least one selected from the group consisting of an acrylic-based block copolymer and a thermoplastic polyurethane resin,
   a mass ratio (A)/(B) of the modified hydrogenated product (A) to the resin (B) is 90/10 to 10/90, and
   a melt flow rate measured under conditions of a temperature of 230°C and a load of 21 N in accordance with JIS K7210:2014 is 5 g/10 minutes or more.
[2] The resin composition according to [1], further including a hydrogenated block copolymer (C) comprising a polymer block (C-1) containing a structural unit derived from an aromatic vinyl compound and a polymer block (C-2) containing a structural unit derived from a conjugated diene compound.
[3] The resin composition according to [2], in which the polymer block (C-2) has a vinyl bonding amount of 1 to 85 mol%.
[4] The resin composition according to [2] or [3], in which a hydrogenation rate of a carbon-carbon double bond in the polymer block (C-2) is 80 to 100 mol%.
[5] The resin composition according to any of [2] to [4], in which the conjugated diene compound in the polymer block (C-2) contains at least one selected from the group consisting of isoprene, butadiene, and farnesene.
[6] The resin composition according to any of [2] to [5], in which a content ratio of the polymer block (C-1) in the hydrogenated block copolymer (C) is 5 to 70% by mass.
[7] The resin composition according to any one of Claims 1 to 6, in which a content of the functional group with respect to the modified hydrogenated product (A) is 0.10 to 5.00 phr.
[8] The resin composition according to any of [1] to [7], in which a hydrogenation rate of a carbon-carbon double bond in the polymer block (A-2) is 80 to 100 mol%.
[9] The resin composition according to any of [1] to [8], in which a content ratio of the structural unit derived from isoprene in the polymer block (A-2) is 30% by mass or more.
[10] The resin composition according to any of [1] to [9], in which the conjugated diene compound in the polymer block (A-2) contains isoprene and butadiene.
[11] The resin composition according to any of [1] to [10], in which a content ratio of the polymer block (A-1) in the modified hydrogenated product (A) is 5 to 40 % by mass.
[12] The resin composition according to any of [2] to [6], including 5 to 200 parts by mass of a softener with respect to 100 parts by mass of the hydrogenated block copolymer (C).
[13] The resin composition according to [12], in which the softener is at least one selected from the group consisting of a paraffine-based process oil, a naphthene-based process oil, and an aromatic-based process oil.
[14] A molded body including the resin composition according to any of [1]to [13].
[15] A multilayer structure including: a layer formed of the resin composition according to any of [1] to [13]; and a layer formed of a material other than the resin composition.
[16] The multilayer structure according to [15], in which the other material is at least one selected from the group consisting of a synthetic resin and a metal.
[17] A method for producing the multilayer structure according to [15] or [16], comprising injection insert molding of the resin composition to the layer formed of the other material than the resin composition.

### Advantageous Effects of Invention

According to the present invention, it is possible to provide a resin composition, a molded body, a multilayer structure, and a method for producing a multilayer structure, which are excellent in tensile properties and have strong adhesive force to a synthetic resin, a metal, and the like.

### Description of Embodiments

Hereinafter, the present invention is described in accordance with an example of an embodiment of the present invention. Note that the embodiments described below are examples for embodying the technical idea of the present invention, and the present invention is not limited to the following description.

In addition, in the present specification, a preferable form of an embodiment is shown, but a combination of two or more of the individual preferable forms is also a preferable form. When there are several numerical ranges for the matters indicated by the numerical ranges, the lower limit value and the upper limit value of the numerical ranges can be selectively combined to form a preferable embodiment.

Note that, in the present specification, when a numerical range of "XX to YY" is described, it means "XX or more and YY or less".

In the present specification, "(meth) acrylonitrile" means "acrylonitrile or methacrylonitrile". Further, "(meth) acrylic" means "acrylic or methacrylic".

The resin composition of the present embodiment contains a modified hydrogenated product (A) and a resin (B).

The present inventors have conducted various studies on a formulation for a resin composition to be excellent in both tensile properties and adhesive force. As a result, the present inventors have found that it is effective that the modified hydrogenated product (A) contains a polymer block (A-2) having a specific vinyl bonding amount. In addition, it has been found that it is effective that the resin composition contains at least one resin (B) selected from the group consisting of an acrylic-based block copolymer and a thermoplastic polyurethane resin, and the resin composition exhibits a specific melt flow rate.

Some conventional resin compositions require a molding temperature condition of about 260°C or higher in order to obtain a sufficient adhesive force in injection molding. However, there is a resin composition which is subjected to thermal deterioration under a high temperature condition of about 260°C or more, and for example, a decrease in tensile elongation, a change in hue, and the like due to the thermal deterioration can be a factor of decreasing the value as a plastic material. On the other hand, when the resin composition is injection-molded under a low temperature (about 230°C) condition at which a decrease in tensile elongation, a change in hue, and the like are less likely to occur, sufficient adhesive force cannot be obtained, and thus the original object cannot be achieved.

The resin composition of the present embodiment can exhibit a strong adhesive force even when being injection-molded under a low temperature (for example, about 230°C) condition. The reason for this is not necessarily clear, but it is considered that one of the factors is that the modified hydrogenated product (A) having a reactive functional group contains a polymer block (A-2) having a specific vinyl bonding amount. In the resin composition of the present embodiment, by containing the modified hydrogenated product (A) containing the polymer block (A-2) and the resin (B), the functional group contained in the modified hydrogenated product (A) is present in a large amount on a surface of a molded body of the resin composition, and the adhesive force is assumed to be improved by an anchor effect. As described above, it is considered that a vinyl bonding amount of the polymer block (A-2), containing the resin (B), and the like suitably affect the presence of a large amount of the functional group on the surface of the molded body of the resin composition. In addition, since the resin composition of the present embodiment exhibits a specific melt flow rate and can exhibit a strong adhesive force even when injection molding is performed under a low temperature condition, it is considered that it can exhibit excellent tensile elongation and can suppress a change in hue.

### <Resin Composition>

### [Modified Hydrogenated Product (A)]

The modified hydrogenated product (A) comprises a polymer block (A-1) containing a structural unit derived from an aromatic vinyl compound and a polymer block (A-2) containing a structural unit derived from a conjugated diene compound.

One of the modified hydrogenated products (A) can be used alone or two or more thereof can be used.

### <Polymer Block (A-1)>

The polymer block (A-1) contains a structural unit derived from an aromatic vinyl compound.

From the viewpoint of mechanical strength, the lower limit of the content ratio of the structural unit derived from an aromatic vinyl compound in 100 mol% of the polymer block (A-1) is preferably 70 mol% or more, more preferably 80 mol% or more, further more preferably 90 mol% or more, still further more preferably 95 mol% or more, and particularly preferably 100 mol%. The upper limit of the content ratio of the structural unit derived from an aromatic vinyl compound in 100 mol% of the polymer block (A-1) can be 100 mol% or less, can be less than 100 mol%, and can be 99 mol% or less, as long as the effect of the present invention is not impaired.

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, a styrene derivative substituted with a silyl group, indene, vinylnaphthalene, and N-vinylcarbazole. One of these aromatic vinyl compounds can be used alone or two or more thereof can be used.

Among these, from the viewpoint of balance between production cost and physical properties, the aromatic vinyl compound is preferably styrene, α-methylstyrene, or p-methylstyrene, and more preferably styrene.

### [Monomer Other than Aromatic Vinyl Compound]

The polymer block (A-1) can contain a structural unit derived from an unsaturated monomer other than the aromatic vinyl compound (hereinafter, sometimes referred to as "other unsaturated monomer unit(s)"), or needs not contain other unsaturated monomer units, as long as the object and effects of the present invention are not impaired.

From the viewpoint of mechanical strength, the upper limit of the content ratio of the other unsaturated monomer units in 100 mol% of the polymer block (A-1) is preferably 30 mol% or less, more preferably 20 mol% or less, further more preferably 10 mol% or less, still further more preferably 5 mol% or less, and particularly preferably 0 mol%. The lower limit of the content ratio of the other unsaturated monomer units in 100 mol% of the polymer block (A-1) can be more than 0 mol% and can be 1 mol% or more, as long as the effect of the present invention is not impaired.

Examples of the other unsaturated monomers include at least one selected from the group consisting of butadiene, isoprene, 2,3-dimethylbutadiene, 1,3-pentadiene, 1,3-hexadiene, isobutylene, methyl methacrylate, methyl vinyl ether, β-pinene, 8,9-p-menthene, dipentene, methylene norbornene, and 2-methylene tetrahydrofuran. When the polymer block (A-1) contains the other unsaturated monomer units, the bonding form is not particularly limited and can be either random or tapered.

The modified hydrogenated product (A) can have at least one polymer block (A-1). When the modified hydrogenated product (A) has two or more polymer blocks (A-1), these polymer blocks (A-1) can be the same or different.

Note that, in the present specification, "the polymer blocks are different" means that at least one of the monomer unit constituting the polymer block, the weight average molecular weight, the stereoregularity, the ratio of each monomer unit in the case of having a plurality of monomer units, and the copolymerization form (random, gradient, or block) is different.

### (Weight Average Molecular Weight of Polymer Block (A-1))

Regarding the weight average molecular weight (Mw) of the polymer block (A-1), the weight average molecular weight of at least one polymer block (A-1) among the polymer blocks (A-1) included in the modified hydrogenated product (A) is preferably 1,000 to 40,000, more preferably 2,000 to 30,000, further more preferably 3,000 to 20,000, and still further more preferably 4,000 to 15,000. When the modified hydrogenated product (A) has at least one polymer block (A-1) having a weight average molecular weight within the above range, the mechanical strength of the resin composition is further improved, and the moldability is also likely to be excellent.

Note that, in the present specification, the weight average molecular weight is a weight average molecular weight in terms of standard polystyrene obtained by gel permeation chromatography (GPC) measurement. A detailed measurement method can follow the method described in Examples.

### (Content Ratio of Polymer Block (A-1))

The upper limit of the content ratio of the polymer block (A-1) in 100% by mass of the modified hydrogenated product (A) is preferably 40% by mass or less, more preferably 30% by mass or less, further more preferably 20% by mass or less, and still further more preferably 15% by mass or less. When the content ratio of the polymer block (A-1) is 40% by mass or less, the resin composition tends to exhibit more excellent adhesive force, which is preferable. Further, the lower limit of the content ratio of the polymer block (A-1) in 100% by mass of the modified hydrogenated product (A) is preferably 5% by mass or more, more preferably 8% by mass or more, and further more preferably 10% by mass or more. When the content ratio of the polymer block (A-1) is 5% by mass or more, the resin composition tends to exhibit more excellent tensile properties, which is preferable.

Note that, in the present specification, the content ratio of each polymer block in the block copolymer is a value obtained by ¹H-NMR measurement. A detailed measurement method can follow the method described in Examples.

### <Polymer Block (A-2)>

### [Conjugated Diene Compound]

The polymer block (A-2) contains a structural unit derived from a conjugated diene compound.

From the viewpoint of the tensile properties and the adhesive force of the resin composition, the lower limit of the content ratio of the structural unit derived from a conjugated diene compound in 100 mol% of the polymer block (A-2) is preferably 70 mol% or more, more preferably 80 mol% or more, further more preferably 90 mol% or more, still further more preferably 95 mol% or more, and particularly preferably 100 mol%. The upper limit of the content ratio of the structural unit derived from a conjugated diene compound in 100 mol% of the polymer block (A-2) can be 100 mol% or less, can be less than 100 mol%, and can be 99 mol% or less, as long as the effect of the present invention is not impaired.

Examples of the conjugated diene compound include butadiene, isoprene, hexadiene, 2,3-dimethyl-1,3-butadiene, 2-phenyl-1,3-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, farnesene, myrcene, and chloroprene. One of these conjugated diene compounds can be used alone or two or more thereof can be used.

Among these, from the viewpoint that the resin composition has both excellent tensile properties and excellent adhesive force, in the polymer block (A-2), the conjugated diene compound preferably contains at least isoprene, and for example, preferably contains isoprene, or isoprene and butadiene.

In addition, from the viewpoint that the resin composition tends to exhibit excellent tensile properties and adhesive force, the lower limit of the content ratio of the structural unit derived from isoprene in 100% by mass of the polymer block (A-2) is preferably 30% by mass or more, more preferably 40% by mass or more, further more preferably 45% by mass or more, still further more preferably 50% by mass or more, and can be 100% by mass.

When isoprene and butadiene are used in combination, the blending ratio thereof [isoprene/butadiene] (mass ratio) is not particularly limited, and is preferably 5/95 to 95/5, more preferably 10/90 to 90/10, further more preferably 40/60 to 70/30, and still further more preferably 45/55 to 65/35. Note that the blending ratio [isoprene/butadiene] is preferably 5/95 to 95/5, more preferably 10/90 to 90/10, further more preferably 40/60 to 70/30, and still further more preferably 45/55 to 55/45, in terms of molar ratio.

### [Monomer Other than Conjugated Diene Compound]

The polymer block (A-2) can contain a structural unit derived from a polymerizable monomer other than the conjugated diene compound, or needs not contain such a structural unit, as long as the object and effect of the present invention are not impaired.

From the viewpoint of the mechanical strength of the resin composition, the upper limit of the content ratio of the structural unit derived from the other polymerizable monomers in 100 mol% of the polymer block (A-2) is preferably 30 mol% or less, more preferably 20 mol% or less, further more preferably 10 mol% or less, still further more preferably 5 mol% or less, and particularly preferably 0 mol%. The lower limit of the content ratio of the structural unit derived from the other polymerizable monomers in the polymer block (A-2) can be more than 0 mol%, and can be 1 mol% or more, as long as the effect of the present invention is not impaired.

Preferable examples of the other polymerizable monomers include aromatic vinyl compounds such as styrene, α-methylstyrene, o-methylstyrene, m-methylstyrene, p-methylstyrene, p-t-butylstyrene, 2,4-dimethylstyrene, N-vinylcarbazole, vinylnaphthalene and vinylanthracene, and at least one compound selected from the group consisting of methyl methacrylate, methyl vinyl ether, β-pinene, 8,9-p-menthene, dipentene, methylenenorbornene, 2-methylenetetrahydrofuran, 1,3-cyclopentadiene, 1,3-cyclohexadiene, 1,3-cycloheptadiene and 1,3-cyclooctadiene.

The modified hydrogenated product (A) can have at least one polymer block (A-2). When the modified hydrogenated product (A) has two or more polymer blocks (A-2), these polymer blocks (A-2) can be the same or different.

### (Vinyl Bonding Amount of Polymer Block (A-2))

In the modified hydrogenated product (A), for example, when the structural unit constituting the polymer block (A-2) is any of an isoprene unit and a mixture unit of isoprene and butadiene, the bonding form of each of isoprene and butadiene can be a vinyl bond such as a 1,2-bonding and a 1,4-bonding in the case of butadiene, and a 1,2-bonding, a 3,4-bonding, and a 1,4-bonding in the case of isoprene. Only one of these bonding forms can be present, or two or more can be present. Among these, the 1,2-bonding and the 3,4-bonding are defined as vinyl bonding units, and the content ratio of the vinyl bonding unit is defined as the vinyl bonding amount. In this case, the content ratio of the vinyl bonding unit with respect to the total amount of the structural unit derived from isoprene and/or butadiene is defined as the vinyl bonding amount.

In addition, in the modified hydrogenated product (A), for example, when the structural unit constituting the polymer block (A-2) contains a β-farnesene unit, β-farnesene can have a 1,2-bonding, a 1, 13-bonding, or a 3, 13-bonding. Only one of these bonding forms can be present, or two or more can be present. Among these, the 1,2-bonding and the 3,13-bonding are defined as vinyl bonding units, and in this case, the content ratio of the vinyl bonding unit with respect to the total amount of the structural unit derived from β-farnesene is defined as the vinyl bonding amount.

In the modified hydrogenated product (A), for example, when the structural unit constituting the polymer block (A-2) include an isoprene unit and/or a butadiene unit and a β-farnesene unit, the vinyl bonding amount is the sum of the content ratio of the vinyl bonding unit with respect to the total amount of the structural unit derived from isoprene and/or butadiene and the content ratio of the vinyl bonding unit with respect to the total amount of the structural unit derived from β-farnesene.

The vinyl bonding amount of the polymer block (A-2) is 50 to 99 mol%.

When the vinyl bonding amount of the polymer block (A-2) is 50 mol% or more, a strong adhesive force to both a synthetic resin and a metal can be exhibited. On the other hand, when the vinyl bonding amount of the polymer block (A-2) is 99 mol% or less, the resin composition has flexibility and can exhibit excellent tensile properties.

From the viewpoint of adhesive force, the lower limit of the vinyl bonding amount is preferably 55 mol% or more, more preferably 60 mol% or more, more preferably 65 mol% or more, further more preferably 70 mol% or more, still further more preferably 72 mol% or more, and still further more preferably 75 mol% or more.

From the viewpoint of flexibility and tensile properties, the upper limit of the vinyl bonding amount is preferably 95 mol% or less, more preferably 90 mol% or less, further more preferably 88 mol% or less, and still further more preferably 85 mol% or less.

In the present specification, the vinyl bonding amount is a value calculated by ¹H-NMR measurement according to the method described in Examples.

In the present embodiment, the vinyl bonding amount can be adjusted, for example, by adjusting the kind or addition amount of a Lewis base used as a co-catalyst (vinylating agent) during polymerization.

### (Weight Average Molecular Weight of Polymer Block (A-2))

Regarding the weight average molecular weight (Mw) of the polymer block (A-2), the weight average molecular weight of at least one polymer block (A-2) among the polymer blocks (A-2) included the modified hydrogenated product (A) is preferably 50,000 to 600,000, more preferably 60,000 to 500,000, further more preferably 80,000 to 400,000, and still further more preferably 100,000 to 300,000. When the modified hydrogenated product (A) has at least one polymer block (A-2) having a weight average molecular weight within the above range, the tensile properties are further improved, and the resin composition tends to exhibit excellent adhesive force.

### (Content Ratio of Polymer Block (A-2))

The upper limit of the content ratio of the polymer block (A-2) in 100% by mass of the modified hydrogenated product (A) is preferably 95% by mass or less, more preferably 92% by mass or less, and further more preferably 90% by mass or less. When the content ratio of the polymer block (A-2) in 100% by mass of the modified hydrogenated product (A) is 95% by mass or less, the resin composition can more easily obtain excellent mechanical strength and moldability, which is preferable. Further, the lower limit of the content ratio of the polymer block (A-2) in the modified hydrogenated product (A) is preferably 60% by mass or more, more preferably 70% by mass or more, further more preferably 80% by mass or more, and still further more preferably 85% by mass or more. When the content ratio of the polymer block (A-2) in 100% by mass of the modified hydrogenated product (A) is 60% by mass or more, the resin composition can more easily exhibit excellent adhesive force, which is preferable.

### (Hydrogenation Rate of Polymer Block (A-2))

From the viewpoint of the heat resistance and weather resistance of the resin composition, the lower limit of the hydrogenation rate of the carbon-carbon double bond in the polymer block (A-2) is preferably 80 mol% or more, more preferably 85 mol% or more, further more preferably 88 mol% or more, and still further more preferably 90 mol% or more. The upper limit of the hydrogenation rate is not particularly limited, and can be 100 mol% or less, 99.9 mol% or less, or 99.5 mol% or less.

Note that, in the present specification, the hydrogenation rate can be calculated by determining the content of carbon-carbon double bond in the structural unit derived from the conjugated diene compound in the polymer block by ¹H-NMR measurement of the polymer block before and after hydrogenation. Specifically, it is determined by the following formula. Hydrogenation rate (mol%) of modified hydrogenated product (A) before modification = {1 - (number of moles of carbon-carbon double bond contained per 1 mole of modified hydrogenated product (A) before modification)/(number of moles of carbon-carbon double bond contained per 1 mole of modified hydrogenated product (A) before modification at the time before hydrogenation)} × 100 More specifically, the hydrogenation rate is measured according to the method described in Examples.

### (Bonding Mode of Polymer Block (A-1) and Polymer Block (A-2))

In the modified hydrogenated product (A), the bonding mode is not limited as long as the polymer block (A-1) and the polymer block (A-2) are bonded to each other, and the bonding mode can be any of linear, branched, radial, or a combination of two or more thereof. Among these, the bonding mode of the polymer block (A-1) and the polymer block (A-2) is preferably linear.

When the polymer block (A-1) is represented by A and the polymer block (A-2) is represented by B, examples of the bonding mode can include a diblock copolymer represented by A-B, a triblock copolymer represented by A-B-A or B-A-B, a tetrablock copolymer represented by A-B-A-B, a pentablock copolymer represented by A-B-A-B-A or B-A-B-A-B, and an (A-B)ₙ Z-type copolymer (Z represents a coupling agent residue, and n represents an integer of 3 or more). Among these, a linear triblock copolymer, pentablock copolymer, or diblock copolymer is preferable, and an A-B-A type triblock copolymer is preferably used from the viewpoint of flexibility, ease of production, and the like.

Specific examples of the A-B-A type triblock copolymer include a styrene-hydrogenated butadiene/isoprene-styrene copolymer, a styrene-hydrogenated butadiene-styrene copolymer, and a styrene-hydrogenated isoprene-styrene copolymer.

Here, in the present specification, when polymer blocks of the same kind are linearly bonded via a bifunctional coupling agent or the like, the whole of the bonded polymer blocks is treated as one polymer block. Accordingly, originally, a polymer block which should be strictly represented by Y-Z-Y (Z represents a coupling residue), including the above-mentioned examples, is represented by Y as a whole, unless it is particularly necessary to distinguish it from a single polymer block Y. In the present specification, since this kind of polymer block containing a coupling agent residue is handled as described above, for example, a block copolymer which contains a coupling agent residue and which should be strictly described as A-B-Z-B-A (Z represents a coupling agent residue) is described as A-B-A and handled as an example of a triblock copolymer.

### (Content Ratio of Polymer Blocks (A-1) and (A-2))

The modified hydrogenated product (A) can contain a polymer block other than the polymer blocks (A-1) and (A-2) or needs not contain the other polymer blocks, as long as the object and effect of the present invention are not impaired.

The lower limit of the total content ratio of the polymer block (A-1) and the polymer block (A-2) in 100% by mass of the modified hydrogenated product (A) is preferably 90% by mass or more, more preferably 95% by mass or more, and particularly preferably substantially 100% by mass. When it is 90% by mass or more, the resin composition more easily exhibits excellent mechanical strength, moldability, and adhesive force, which is preferable. In the modified hydrogenated product (A), the upper limit of the total content ratio of the polymer block (A-1) and the polymer block (A-2) is preferably 100% by mass or less.

### <Functional Group>

The modified hydrogenated product (A) has at least one functional group selected from the group consisting of a carboxy group, an amino group, a hydroxy group, and an acid anhydride-derived group.

When the resin composition of the present embodiment contains the modified hydrogenated product (A) having the functional group, a strong adhesive force to a synthetic resin and a metal can be exhibited.

Examples of the acid anhydride-derived group include a maleic anhydride-derived group. Here, the "maleic anhydride-derived group" is a group having a structure in which one of carbons constituting a double bond of a ring of maleic anhydride becomes a bonding hand. From the viewpoint of the adhesive force of the resin composition, particularly from the viewpoint of the adhesive force to a metal, the functional group contained in the modified hydrogenated product (A) is preferably at least one functional group selected from the group consisting of a carboxy group and an acid anhydride-derived group, and more preferably an acid anhydride-derived group.

In addition, the modified hydrogenated product (A) preferably has the functional group in a side chain thereof, and more preferably has the functional group in a side chain of the polymer block (A-2), whereby the adhesive force of the resin composition of the present embodiment can be improved. Note that the method for producing the modified hydrogenated product (A) is specifically as mentioned later.

The lower limit of the content of the functional group with respect to the modified hydrogenated product (A) is preferably 0.10 phr or more, more preferably 0.15 phr or more, further more preferably 0.20 phr or more, and still further more preferably 0.30 phr or more. In addition, the upper limit of the content of the functional group with respect to the modified hydrogenated product (A) is preferably 5.00 phr or less, more preferably 4.00 phr or less, further more preferably 3.00 phr or less, still further more preferably 2.00 phr or less, still further more preferably 1.50 phr or less, still further more preferably 1.00 phr or less, and can be 0.90 phr or less.

When the content of the functional group with respect to the modified hydrogenated product (A) is within the above range, the adhesive force of the resin composition containing the modified hydrogenated product (A) can be easily improved, and the tensile properties become more excellent, which is preferable. When the content of the functional group with respect to the modified hydrogenated product (A) is equal to or less than the upper limit of the above range, gelation can be suppressed, which is preferable.

Note that the content of the functional group (phr) means parts by mass of the functional group with respect to 100 parts by mass of the modified hydrogenated product (A).

The content of the functional group in the modified hydrogenated product (A) can be calculated by neutralization titration. As mentioned above, in a preferable embodiment, the functional group contained in the modified hydrogenated product (A) is at least one functional group selected from the group consisting of a carboxy group and an acid anhydride-derived group. More specifically, the content of the functional group with respect to the modified hydrogenated product (A) is measured according to the method described in Examples.

### <Method for Producing Modified Hydrogenated Product (A)>

The modified hydrogenated product (A) can be produced by first using at least an aromatic vinyl compound and a conjugated diene compound as monomers, subjecting them to a polymerization reaction to form a block copolymer, and then subjecting the block copolymer to a step of a modification reaction using a modifying agent before hydrogenation or after hydrogenation.

### (Polymerization Reaction)

The polymerization reaction can be performed by, for example, a solution polymerization method, an emulsion polymerization method, a solid-phase polymerization method, or the like. Among these, the solution polymerization method is preferable, and for example, a known method such as an ion polymerization method such as anionic polymerization or cationic polymerization, or a radical polymerization method can be applied. Among them, the anionic polymerization method is preferable. In the anionic polymerization method, an aromatic vinyl compound and a conjugated diene compound are sequentially added in the presence of a solvent, an anionic polymerization initiator, and as necessary, a Lewis base to obtain a block copolymer, and as necessary, a coupling agent can be added and reacted.

Examples of the organolithium compound that can be used as the anionic polymerization initiator include methyllithium, ethyllithium, n-butyllithium, sec-butyllithium, tert-butyllithium, and pentyllithium. Further, examples of the dilithium compound which can be used as the anionic polymerization initiator include naphthalenedilithium and dilithiohexylbenzene.

Examples of the coupling agent include dichloromethane, dibromomethane, dichloroethane, dibromoethane, dibromobenzene, phenyl benzoate, tetramethoxysilane, methyltrimethoxysilane, tetraethoxysilane, methyltriethoxysilane, 3-glycidyloxypropyltrimethoxysilane, and 3-glycidyloxypropyltriethoxysilane.

These amounts of the anionic polymerization initiator and the coupling agent to be used are appropriately determined depending on the desired weight average molecular weight of the modified hydrogenated product (A). In general, the anionic polymerization initiator such as an organolithium compound or a dilithium compound is preferably used in a proportion of 0.01 to 0.2 parts by mass per 100 parts by mass of the total of the monomers such as the aromatic vinyl compound and the conjugated diene compound used for polymerization, and when the coupling agent is used, it is preferably used in a proportion of 0.001 to 0.8 parts by mass per 100 parts by mass of the total of the monomers.

The solvent is not particularly limited as long as it does not adversely affect the anionic polymerization reaction, and examples thereof include an aliphatic hydrocarbon such as cyclohexane, methylcyclohexane, n-hexane, and n-pentane; and an aromatic hydrocarbon such as benzene, toluene, and xylene.

Further, the polymerization reaction is usually performed at a temperature of 0 to 100°C, preferably 10 to 70°C, for 0.5 to 50 hours, and preferably 1 to 30 hours.

In addition, the vinyl bonding amount can be increased by a method of adding a Lewis base as a co-catalyst at the time of polymerization of the conjugated diene compound.

Examples of the Lewis base which can be used include ethers such as dimethyl ether, diethyl ether, tetrahydrofuran, and 2,2-di (2-tetrahydrofuryl) propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine, and N-methylmorpholine; and metal salts such as sodium or potassium salts of aliphatic alcohols such as sodium t-butylate, sodium t-amylate, and sodium isopentylate, or sodium or potassium salts of alicyclic alcohols such as dialkylsodium cyclohexanolate, for example, sodium mentholate. Among the Lewis bases, tetrahydrofuran and DTHFP are preferably used from the viewpoint of easy control of the vinyl bonding amount. In addition, DTHFP is more preferably used because a high vinyl bonding amount can be achieved, a high hydrogenation rate can be easily achieved without using an excessive amount of a hydrogenation catalyst, and both more excellent tensile properties and adhesive force can be achieved.

One of these Lewis bases can be used alone or in combination of two or more thereof.

The addition amount of the Lewis base is arbitrarily determined depending on the extent to which the vinyl bonding amount in the polymer block (A-2) is controlled. Therefore, the addition amount of the Lewis base is not limited in a strict sense, but it is usually used in a range of 0.1 to 1,000 mol, and preferably 1 to 100 mol, per 1 gram of atom of lithium contained in the organolithium compound or dilithium compound used as the polymerization initiator.

After the polymerization is performed by the method, an active hydrogen compound such as alcohols, carboxylic acids or water is added to stop the polymerization reaction, whereby a block copolymer can be obtained.

### (Hydrogenation)

By hydrogenating the block copolymer obtained in the above step, a hydrogenated product of the block copolymer can be obtained.

When the block copolymer is hydrogenated, the hydrogen addition reaction (hydrogenation reaction) is performed in an inert organic solvent in the presence of a hydrogenation catalyst. By the hydrogenation reaction, the carbon-carbon double bond derived from the conjugated diene compound in the polymer block (A-2) in the block copolymer is hydrogenated, and a hydrogenated product of the block copolymer can be obtained.

The hydrogenation reaction can be performed at a hydrogen pressure of about 0.1 to 20 MPa, preferably 0.5 to 15 MPa, and more preferably 0.5 to 5 MPa. Further, the hydrogenation reaction can be performed at a reaction temperature of about 20 to 250°C, preferably 50 to 180°C, and more preferably 70 to 180°C. In addition, the hydrogenation reaction can be performed in a reaction time of usually 0.1 to 100 hours, and preferably 1 to 50 hours.

Examples of the hydrogenation catalyst include Raney nickel; a heterogeneous catalyst in which a metal such as Pt, Pd, Ru, Rh, or Ni is supported on a carrier such as carbon, alumina, or diatomaceous earth; a Ziegler-based catalyst formed of a combination of a transition metal compound and an alkyl aluminum compound, an organolithium compound, or the like; and a metallocene-based catalyst. Among these, from the viewpoint of easily suppressing nuclear hydrogenation of an aromatic ring, a Ziegler-based catalyst is preferable, a Ziegler-based catalyst formed of a combination of a transition metal compound and an alkyl aluminum compound is more preferable, and a Ziegler-based catalyst formed of a combination of a nickel compound and an alkyl aluminum compound (Al/Ni-based Ziegler catalyst) is further more preferable.

The hydrogenated product of the block copolymer thus obtained can be obtained by pouring the polymerization reaction liquid into methanol or the like to cause precipitation, followed by heating or drying under reduced pressure, or by pouring the polymerization reaction liquid into hot water together with steam, followed by so-called steam stripping in which the solvent is removed by azeotropy, followed by heating or drying under reduced pressure.

### (Modification Reaction)

The modified hydrogenated product (A) can be produced by introducing the above-mentioned functional group before or after hydrogenation of the block copolymer. When the functional group is introduced by a radical reaction, from the viewpoint of reaction control, it is preferable to introduce a specific functional group after hydrogenating the block copolymer to form a hydrogenated product.

The reaction of modifying the hydrogenated product by introducing the above-mentioned functional group (hereinafter, sometimes referred to as "modification reaction") can be performed by a known method.

The modification reaction can be performed by, for example, dissolving the hydrogenated product of the block copolymer in an organic solvent, adding thereto various modifying agents capable of adding the above-mentioned functional group, and reacting it at about 50 to 300°C for about 0.5 to 10 hours.

Further, the modification reaction can be performed, for example, by getting the hydrogenated product of the block copolymer into a molten state using an extruder or the like without using a solvent, and adding various modifying agents. In this case, the temperature of the modification reaction is usually the glass transition temperature of the hydrogenated product of the block copolymer or higher and 400°C or lower, preferably 90 to 350°C, and more preferably 100 to 300°C. The reaction time of the modification reaction is usually about 0.5 to 10 minutes.

In addition, it is preferable to add a radical initiator when the modification reaction is performed in a molten state, and an antioxidant can be added from the viewpoint of suppressing a side reaction or the like.

Note that a radical initiator can also be added in the reaction of modifying the block copolymer by introducing the above-mentioned functional group before hydrogenation.

The modification reaction is preferably performed by the latter method of performing modification in a molten state from the viewpoint of easily achieving excellent workability and thermal stability.

That is, a preferable embodiment of the method for producing the modified hydrogenated product (A) includes a step of hydrogenating the block copolymer to form a hydrogenated product and then introducing at least one functional group selected from the group consisting of a carboxy group, an amino group, a hydroxy group, and an acid anhydride-derived group into the hydrogenated product in a molten state by using a radical initiator.

Examples of the modifying agent capable of adding the functional group include vinylbenzyl diethylamine, vinylbenzyl dimethylamine, 1-glycidyl-4-(2-pyridyl) piperazine, **1-**glycidyl-4-phenylpiperazine, 1-glycidyl-4-methylpiperazine, 1-glycidyl-4-methylhomopiperazine, 1-glycidyl hexamethyleneimine, tetraglycidyl-1,3-bisaminomethylcyclohexane, 1-dodecanol, cetanol (cetyl alcohol), stearyl alcohol, and oleyl alcohol, and further, an unsaturated carboxylic anhydride such as maleic anhydride, citraconic anhydride, 2,3-dimethylmaleic anhydride, and itaconic anhydride can be used as a modifying agent. Further, a modifying agent capable of adding the functional group can be applied from the modifying agents described in JP2011-132298A. One of the modifying agents can be used alone or two or more thereof can be used in combination.

The addition amount of the modifying agent can be appropriately determined so as to achieve a desired content of the functional group, and the modifying agent is usually about 0.01 to 10 parts by mass, preferably 0.01 to 5 parts by mass, more preferably 0.01 to 3 parts by mass, and further more preferably 0.05 to 2 parts by mass, with respect to 100 parts by mass of the block copolymer or a hydrogenated product thereof.

As the radical initiator, organic peroxides or organic peresters such as dialkyl peroxides, diacyl peroxides, peroxyesters, peroxyketal, dialkyl peroxides, and hydroperoxides can be used, and further, an azo compound such as azobisisobutyronitrile and dimethyl azoisobutyrate can also be used. Among the radical initiators, an organic peroxide is preferable, and dialkyl peroxides are more preferable.

In the modification reaction, the addition amount of the radical initiator can be appropriately determined depending on the combination of the block copolymer or a hydrogenated product thereof and the modifying agent, and the radical initiator is usually about 0.01 to 10 parts by mass, preferably 0.01 to 5 parts by mass, more preferably 0.01 to 3 parts by mass, and further more preferably 0.05 to 2 parts by mass, with respect to 100 parts by mass of the block copolymer or a hydrogenated product thereof.

### <Melt Flow Rate of Modified Hydrogenated Product (A)>

The lower limit of the melt flow rate of the modified hydrogenated product (A) measured under conditions of a temperature of 230°C and a load of 21 N in accordance with JIS K 7210:2014 is preferably 1 g/10 minutes or more, more preferably 5 g/10 minutes or more, and further more preferably 10 g/10 minutes or more. Further, the upper limit of the melt flow rate of the modified hydrogenated product (A) is preferably 30 g/10 minutes or less, more preferably 26 g/10 minutes or less, and further more preferably 23 g/10 minutes or less.

When the melt flow rate of the modified hydrogenated product (A) is within the above numerical range, the resin composition is excellent in moldability and even more excellent in tensile properties.

### <Weight Average Molecular Weight of Modified Hydrogenated Product (A)>

From the viewpoint of the mechanical strength of the resin composition, the lower limit of the weight average molecular weight of the modified hydrogenated product (A) is preferably 50,000 or more, more preferably 80,000 or more, further more preferably 100,000 or more, and still further more preferably 130,000 or more.

From the viewpoint of the moldability and the adhesive force of the resin composition, the upper limit of the weight average molecular weight of the modified hydrogenated product (A) is preferably 400,000 or less, more preferably 350,000 or less, further more preferably 300,000 or less, and still further more preferably 200,000 or less.

### <Peak Top Intensity and Peak Top Temperature of tan δ of Modified Hydrogenated Product (A)>

The modified hydrogenated product (A) preferably has a peak top intensity of tan δ of 1.0 to 3.0 as measured in accordance with JIS K 7244-10:2005 under the conditions of a strain amount of 0.1%, a frequency of 1 Hz, a measurement temperature of -70 to +120°C, and a rate of temperature increase of 3°C/minute.

In the present embodiment, the peak top intensity of tan δ can be measured using a test piece obtained by pressurizing the modified hydrogenated product (A) at a temperature of 230°C in a pressure of 10 MPa for 3 minutes to prepare a single layer sheet having a thickness of 1.0 mm and cutting the single layer sheet into a disk shape.

Note that, in the present embodiment, the measuring device of tan δ is not particularly limited, but a rotational rheometer "ARES-G2" (manufactured by TA Instruments Inc.) or the like can be used, and the test can be performed by sandwiching the test piece between flat plates having a diameter of 8 mm. More details are as described in Examples.

In the modified hydrogenated product (A), the lower limit of the peak top intensity of tan δ by the measurement can be preferably 1.0 or more, and, in some cases of the higher lower limit, 1.5 or more, and further, 1.9 or more. Further, the upper limit value of the peak top intensity of tan δ is not particularly limited, and can be 3.0 or less, 2.5 or less, or 2.3 or less. The higher the peak top intensity of tan δ, the more excellent the physical properties such as vibration-damping property at that temperature.

The peak top temperature of tan δ of the modified hydrogenated product (A) is determined by the same method as that for the peak top intensity of tan δ.

Further, in the modified hydrogenated product (A), the lower limit of the peak top temperature of tan δ is preferably -25°C or higher, more preferably -10°C or higher, and further more preferably 0°C or higher. In addition, the upper limit of the peak top temperature of tan δ can be +40°C or lower or +35°C or lower, as long as the effect of the present invention is not impaired. When the peak top temperature of tan δ of the modified hydrogenated product (A) is within the above range, the adhesive force and tensile properties of the resin composition tend to be more excellent, which is preferable.

It indicates that the peak top intensity and peak top temperature of tan δ can be controlled by methods such as optimizing the selection and content ratio of monomers used in the modified hydrogenated product (A) and suitably adjusting the vinyl bonding amount.

### <Glass Transition Temperature of Modified Hydrogenated Product (A)>

The glass transition temperature of the modified hydrogenated product (A) is preferably -30 to +40°C, more preferably -20 to +30°C, and further more preferably -5 to +25°C.

When the glass transition temperature of the modified hydrogenated product (A) is within the above range, the adhesive force and tensile properties of the resin composition tend to be more excellent, which is preferable.

In the present specification, the glass-transition temperature is a value measured using a differential scanning calorimeter (DSC) measuring device.

### [Resin (B)]

The resin (B) is at least one selected from the group consisting of an acrylic-based block copolymer and a thermoplastic polyurethane resin.

By using at least one selected from the group consisting of an acrylic-based block copolymer and a thermoplastic polyurethane resin as the resin (B), the resin composition of the present embodiment can exhibit a stronger adhesive force to a synthetic resin, a metal, and the like. The acrylic-based block copolymer is preferably used, because the adhesive force of the resin composition to a metal is more remarkably excellent when the resin composition contains an acrylic-based block copolymer.

### <Acrylic-Based Block Copolymer>

The acrylic-based block copolymer is a copolymer having a plurality of polymer blocks containing a structural unit derived from a (meth) acrylic acid ester. From the viewpoint of flexibility, weather resistance, and adhesive force, among the acrylic-based block copolymers, an acrylic-based block copolymer having a polymer block (D1) containing a structural unit derived from an acrylic acid ester and a polymer block (E1) containing a structural unit derived from a methacrylic acid ester is preferable.

### [Polymer Block (D1)]

The polymer block (D1) contains a structural unit derived from an acrylic acid ester. Such an acrylic acid ester is roughly categorized into an acrylic acid ester represented by the general formula CH₂=CH-COOR¹ (X) (in the formula (X), R¹ represents an organic group having 1 to 3 carbon atoms) (hereinafter referred to as "acrylic acid ester (d-1)"), an acrylic acid ester represented by the general formula CH₂=CH-COOR² (Y) (in the formula (Y), R² represents an organic group having 4 to 12 carbon atoms) (hereinafter referred to as "acrylic acid ester (d-2)"), and acrylic acid ester other than these.

Examples of the organic group having 1 to 3 carbon atoms represented by R¹ include an alkyl group having 1 to 3 carbon atoms such as a methyl group, an ethyl groups, an n-propyl group, and an isopropyl group; and an organic group having a total of 1 to 3 carbon atoms and containing a non-carbon element such as oxygen, such as a methoxyethyl group, a hydroxy ethyl group, an aminoethyl group, and a glycidyl group. Examples of such an acrylic acid ester (d-1) include an acrylic acid ester having no functional group, such as methyl acrylate, ethyl acrylate, isopropyl acrylate, and n-propyl acrylate; and an acrylic acid ester having a functional group, such as 2-methoxyethyl acrylate, 2-hydroxyethyl acrylate, 2-aminoethyl acrylate, and glycidyl acrylate.

Examples of the organic group having 4 to 12 carbon atoms represented by R² include an alkyl group having 4 to 12 carbon atoms such as a butyl group, an amyl group (a pentyl group), a hexyl group, a cyclohexyl group, an ethylhexyl group, an octyl group, a decyl group, an isobornyl group, and a lauryl group; an aromatic ring group having 6 to 12 carbon atoms such as a phenyl group and a benzyl group; and an organic group having a total of 4 to 12 carbon atoms and containing a non-carbon element such as oxygen, such as an ethoxyethyl group, a tetrahydrofurfuryl group, a diethylaminoethyl group, and a phenoxyethyl group. Examples of such an acrylic acid ester (d-2) include an acrylic acid ester having no functional group, such as n-butyl acrylate, isobutyl acrylate, sec-butyl acrylate, tert-butyl acrylate, amyl acrylate, isoamyl acrylate, n-hexyl acrylate, 2-ethylhexyl acrylate, n-octyl acrylate, isooctyl acrylate, decyl acrylate, isobornyl acrylate, lauryl acrylate, cyclohexyl acrylate, phenyl acrylate, and benzyl acrylate; and an acrylic acid ester having a functional group, such as 2-ethoxyethyl acrylate, 2-(diethylamino) ethyl acrylate, tetrahydrofurfuryl acrylate, and 2-phenoxyethyl acrylate.

Examples of an acrylic acid ester other than the acrylic acid ester (d-1) and the acrylic acid ester (d-2) include an acrylic acid ester having no functional group, such as octadecyl acrylate.

Among the acrylic acid ester (d-1), from the viewpoint of flexibility of the resin composition to be obtained, an acrylic acid ester having no functional group is preferable, methyl acrylate and ethyl acrylate are more preferable, and methyl acrylate is further more preferable.

### (d-1)/(D1)

The ratio of the acrylic acid ester (d-1) contained in the polymer block (D1) [(d-1)/(D1)] is preferably 10 to 100% by mass, more preferably 30 to 100% by mass, and further more preferably 50 to 100% by mass. Further, the ratio of the acrylic acid ester (d-1) contained in the polymer block (D1) can be 100% by mass. Within the above range, the resin composition of the present embodiment has good molding processability.

The contents of the acrylic acid ester (d-1) and the polymer block (D1) can be determined by ¹H-NMR, and particularly, can be determined by the method described in Examples.

Among the acrylic acid ester (d-2), an acrylic acid ester having no functional group is preferable, an acrylic acid ester having an alkyl group having 4 to 12 carbon atoms is more preferable, and n-butyl acrylate and 2-ethylhexyl acrylate are further more preferable, because the polymer block (D1) and the polymer block (E1) are more clearly phase-separated from each other, from the viewpoint of exhibiting a high cohesive force when formed into a resin composition. In addition, n-butyl acrylate is more preferable from the viewpoint that the obtained resin composition exhibits stable durability in a wide temperature range.

The acrylic acid ester can be used alone or in combination of two or more thereof. In addition, the lower limit of the content ratio of the structural unit derived from an acrylic acid ester in 100% by mass of the polymer block (D1) is preferably 60% by mass or more, more preferably 80% by mass or more, further more preferably 90% by mass or more, and can be 100% by mass.

Among the above acrylic acid ester, at least one selected from the group consisting of the acrylic acid ester (d-1) and the acrylic acid ester (d-2) is preferable from the viewpoint that compatibility between the acrylic-based block copolymer and the modified hydrogenated product (A) is enhanced, and stable adhesive force and molding processability are exhibited.

In a preferable embodiment, the acrylic acid ester used for the polymer block (D1) contains at least one selected from acrylic acid ester (d-1) and at least one selected from acrylic acid ester (d-2). In this case, the mass ratio (d-1)/(d-2) of the structural unit derived from the acrylic acid ester (d-1) to the structural unit derived from the acrylic acid ester (d-2) is preferably 90/10 to 10/90, more preferably 80/20 to 20/80, further more preferably 70/30 to 30/70, and still further more preferably 60/40 to 40/60.

When (d-1)/(d-2) is within the above range, the compatibility between the acrylic-based block copolymer and the modified hydrogenated product (A) is enhanced, and stable adhesive force and molding processability are easily exhibited. Note that the mass ratio between the acrylic acid ester (d-1) to the acrylic acid ester (d-2) can be determined by ¹H-NMR measurement.

Examples of the combination of the acrylic acid ester (d-1) and the acrylic acid ester (d-2) used for the polymer block (D1) include methyl acrylate/n-butyl acrylate. At this time, as the acrylic acid ester (d-1) and the acrylic acid ester (d-2) to be used, the difference in solubility parameter between the acrylic acid ester (d-1) and the acrylic acid ester (d-2) is preferably 0.3 to 2.5 (MPa)^{1/2}. Note that the solubility parameter can be calculated by the method described in "POLYMER HANDBOOK Forth Edition", VII, pages 675 to 714 (published by Wiley Interscience, 1999) and "Polymer Engineering and Science", 1974, vol. 14, pages 147 to 154. In addition, when two or more polymer blocks (D1) are contained in the acrylic-based block copolymer, the combination of acrylic acid ester to be the polymer blocks (D1) can be identical or different.

When the polymer block (D1) is a copolymer containing both the acrylic acid ester (d-1) unit and the acrylic acid ester (d-2) unit, the polymer block can be composed of a random copolymer, a block copolymer, or a gradient copolymer, of the acrylic acid ester (d-1) and the acrylic acid ester (d-2), but, in general, is preferably composed of a random copolymer. When the acrylic-based block copolymer contains two or more polymer blocks (D1), the polymer blocks (D1) can have the same structure or different structures. Further, the lower limit of the proportion of the total unit of the acrylic acid ester (d-1) and (d-2) contained in the polymer block (D1) is preferably 60% by mass or more, more preferably 80% by mass or more, further more preferably 90% by mass or more, and can be 100% by mass, in 100% by mass of the polymer block (D1).

The glass-transition temperature of the polymer block (D1) is preferably -100 to +30°C, more preferably -80 to +10°C, further more preferably -70 to 0°C, and most preferably -60 to - 10°C. When the glass transition temperature is within the above range, the resin composition of the present embodiment tends to have excellent adhesive force at room temperature.

### [Polymer Block (E1)]

The polymer block (E1) contains a structural unit derived from a methacrylic acid ester. Examples of such a methacrylic acid ester include a methacrylic acid ester having no functional group such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate and benzyl methacrylate; and a methacrylic acid ester having a functional group such as methoxyethyl methacrylate, ethoxyethyl methacrylate, diethylaminoethyl methacrylate, 2-hydroxyethyl methacrylate, 2-aminoethyl methacrylate, glycidyl methacrylate and tetrahydrofurfuryl methacrylate.

Among these, from the viewpoint of improving heat resistance and durability of the resin composition to be obtained, the polymer block (E1) is preferably a methacrylic acid ester having no functional group, and more preferably methyl methacrylate, ethyl methacrylate, tert-butyl methacrylate, cyclohexyl methacrylate, 2-ethylhexyl methacrylate, isobornyl methacrylate, phenyl methacrylate, or benzyl methacrylate. The polymer block (E1) is more preferably methyl methacrylate from the viewpoint that the polymer block (D1) and the polymer block (E1) are more clearly phase-separated and the mechanical strength of the resin composition to be obtained is improved. The polymer block (E1) can be formed of one of these methacrylic acid ester or can be formed of two or more thereof. **In** addition, the acrylic-based block copolymer preferably has two or more polymer blocks (E1) from the viewpoint of further increasing mechanical strength. In that case, the polymer blocks (E1) can be identical or different.

The peak top molecular weight (Mp) of the polymer block (E1) is not particularly limited, but is preferably in the range of 1,000 to 50,000, and more preferably in the range of 2,000 to 30,000. When the Mp of the polymer block (E1) is within the above range, there is no possibility that the cohesive strength of the obtained acrylic-based block copolymer is insufficient, the melt viscosity of the obtained acrylic-based block copolymer does not become too high, and productivity at the time of producing the resin composition tends to be good. Note that, Mp is a molecular weight at a position of a peak top in a differential molecular weight distribution curve obtained by GPC measurement.

The lower limit of the content ratio of the structural unit derived from a methacrylic acid ester in 100% by mass of the polymer block (E1) is preferably 60% by mass or more, more preferably 80% by mass or more, further more preferably 90% by mass or more, and can be 100% by mass.

The glass transition temperature of the polymer block (E1) is preferably 80 to 140°C, more preferably 90 to 130°C, and further more preferably 100 to 120°C. When the glass transition temperature is within the above range, the polymer block (E1) acts as a physical pseudo-crosslinking point at a normal use temperature of the obtained resin composition, and adhesive force, durability, and heat resistance tend to be excellent.

The polymer block (D1) can contain a structural unit derived from a methacrylic acid ester as long as the effect of the present invention is not impaired. Further, the polymer block (E1) can contain a structural unit derived from an acrylic acid ester as long as the effect of the present invention is not impaired.

In addition, a structural unit derived from a monomer other than the (meth)acrylic acid ester can be contained as necessary. Examples of such other monomers include a vinyl-based monomer having a carboxy group such as (meth)acrylic acid, crotonic acid, maleic acid and fumaric acid; an aromatic vinyl-based monomer such as styrene, α-methylstyrene, p-methylstyrene and m-methylstyrene; a conjugated diene-based monomer such as butadiene and isoprene; an olefin-based monomer such as ethylene, propylene, isobutene and octene; a lactone-based monomer such as ε-caprolactone and valerolactone; and (meth)acrylamide, (meth)acrylonitrile, maleic anhydride, vinyl acetate, vinyl chloride and vinylidene chloride. When the monomer is used, the monomer is used in an amount of preferably 40% by mass or less, more preferably 20% by mass or less, and further more preferably 10% by mass or less, with respect to the total mass of the monomers used for each polymer block in the acrylic-based block copolymer.

The acrylic-based block copolymer can have other polymer blocks, as necessary, in addition to the polymer block (D1) and the polymer block (E1). Examples of such other polymer blocks include a polymer block or a copolymer block containing a structural unit derived from a monomer such as styrene, α-methylstyrene, p-methylstyrene, m-methylstyrene, acrylonitrile, methacrylonitrile, ethylene, propylene, isobutene, butadiene, isoprene, octene, vinyl acetate, maleic anhydride, vinyl chloride or vinylidene chloride; and a polymer block composed of polyethylene terephthalate, polylactic acid, polyurethane or polydimethylsiloxane. Further, the other polymer block also includes a hydrogenated product of a polymer block containing a structural unit derived from a conjugated diene compound such as butadiene or isoprene.

When the polymer block (D1) is represented by D1, a polymer block having a structure different from that of the polymer block (D1) (note: excluding the polymer block (E1)) is represented by D1', and the polymer block (E1) is represented by E1, the acrylic-based block copolymer is preferably represented by the following general formulas.

(E1-D1)ₙ

(E1-D1)ₙ-E1

D1-(E1-D1)ₙ

(E1-D1)ₙ-D1'

(E1-D1)ₙ-Z

(D1-E1)ₙ-Z

In the above general formulas, n represents an integer of 1 to 30, Z represents a coupling site (a coupling site after a coupling agent reacts with a polymer terminal to form a chemical bond, and "-" represents a bonding hand of each polymer block). Note that when a plurality of D1 and E1 is contained in the general formulas, they can be polymer blocks having the same structure or polymer blocks having different structures.

Here, the "different structure(s)" means a structure in which at least one of a monomer unit constituting a polymer block, a molecular weight, a molecular weight distribution, stereoregularity, a ratio of each monomer unit when a plurality of monomer units is included, and a copolymerization form (random, gradient, or block) is different.

Further, the value of n is preferably 1 to 15, more preferably 1 to 8, and further more preferably 1 to 4.

Among the above structures, from the view point of further excellent in mechanical strength of the resin composition, linear block copolymers represented by (E1-D1)ₙ, (E1-D1)ₙ-E1, D1-(E1-D1)ₙ, and (E1-D1)ₙ-D1' are preferable, a diblock copolymer represented by E1-D1, a triblock copolymer represented by E1-D1-D1', and a triblock copolymer represented by E1-D1-E1 having blocks of the polymer block (E1), the polymer block (D1), and the polymer block (E1) in this order are more preferable, and a triblock copolymer represented by E1-D1-E1 is further more preferable.

The acrylic-based block copolymer preferably has a peak top molecular weight (Mp) of 50,000 to 250,000. Among these, from the viewpoint of improving the fluidity of the resin composition, the Mp is more preferably from 55,000 to 230,000, further more preferably from 60,000 to 220,000, still further more preferably from 60,000 to 200,000, and particularly preferably from 60,000 to 150,000.

The molecular weight distribution (Mw/Mn) of the acrylic-based block copolymer is preferably 1.00 to 1.40. From the viewpoint of excellent mechanical strength when formed into a resin composition, Mw/Mn is more preferably from 1.00 to 1.35, further more preferably from 1.00 to 1.30, still further more preferably from 1.00 to 1.25, and particularly preferably from 1.00 to 1.20.

Note that the peak top molecular weight (Mp), the number average molecular weight (Mn), and the weight average molecular weight (Mw) of the acrylic-based block copolymer are values obtained by gel permeation chromatography in terms of standard polystyrene, and the molecular weight distribution (Mw/Mn) is a value calculated from the values of the Mw and Mn.

The mass ratio [(E1)/(D1)] of the content of the polymer block (E1) to the content of the polymer block (D1) in the acrylic-based block copolymer is preferably 10/90 to 55/45, more preferably 15/85 to 55/45, further more preferably 20/80 to 53/47, and particularly preferably 25/75 to 52/48.

The contents of the polymer block (D1) and the polymer block (E1) can be determined by ¹H-NMR, and specifically, can be determined by the method described in Examples.

### [Method for Producing Acrylic-Based Block Copolymer]

The method for producing the acrylic-based block copolymer is not particularly limited as long as a polymer satisfying the above-mentioned conditions is obtained, and a method according to a known technique can be adopted. In general, as a method for obtaining a block copolymer having a narrow molecular weight distribution, a method of subjecting a monomer to be a structural unit to living polymerization is adopted. Examples of such a living polymerization technique include a method of living polymerization using an organic rare-earth metal complex as a polymerization initiator (see, JPH06-093060A), a method of living anionic polymerization using an organic alkali metal compound as a polymerization initiator under the presence of a mineral acid salt such as alkali metal or alkaline-earth metal salt (see JPH05-507737A), a method of living anionic polymerization using an organic alkali metal compound as a polymerization initiator under the presence of an organoaluminum compound (see JPH11-335432A), and an atom transfer radical polymerization (ATRP) method(see Macromolecular Chemistry and Physics, 2000, vol. 201, p.1108 to 1114).

Among the above production methods, the method of living anionic polymerization using an organic alkali metal compound as a polymerization initiator under the presence of an organoaluminum compound is preferable because the transparency of the obtained block copolymer is high, the amount of residual monomers is small, the odor is suppressed, and the generation of bubbles can be suppressed at the time of molding the resin composition. In addition, the molecular structure of the polymer block (E1) becomes highly syndiotactic, which is also preferable from the viewpoint of the effect of enhancing the heat resistance of the resin composition.

As the acrylic-based block copolymer, a commercially available product can be used. Specific examples thereof can include "Kurarity (registered trademark)" (trade name) manufactured by Kuraray Co., Ltd. and "Nanostrength (registered trademark)" (trade name) manufactured by Arkema.

### <Thermoplastic Polyurethane Resin>

As the thermoplastic polyurethane resin, for example, a thermoplastic polyurethane obtained by a reaction of a polymer diol, an organic diisocyanate, and a chain extender can be used. The polymer diol used for forming the thermoplastic polyurethane resin preferably has a number average molecular weight of 1,000 to 6,000. This makes it possible to obtain a resin composition excellent in mechanical strength, heat resistance, and the like.

Here, the number average molecular weight of the polymer diol in the present specification is a number average molecular weight calculated based on a hydroxyl value measured by SITE in accordance with JIS K 1557-1:2007.

Examples of the polymer diol used in the production of the thermoplastic polyurethane resin can include polyester diol, polyether diol, polyester ether diol, polycarbonate diol, and polyester polycarbonate diol. One of these polymeric diol can be used alone or two or more thereof can be used in combination.

Examples of the polyester diol used for producing the thermoplastic polyurethane resin can include polyester diol obtained by reacting at least one dicarboxylic acid component selected from the group consisting of an aliphatic dicarboxylic acid, an aromatic dicarboxylic acid, and ester thereof with low molecular weight diol, and polyester diol obtained by ring-opening polymerization of a lactone. More specifically, examples of the polyester diol can include an aliphatic dicarboxylic acid having 6 to 12 carbon atoms such as glutaric acid, adipic acid, pimelic acid, suberic acid, azelaic acid, sebacic acid, and dodecanedioic acid; polyester diol, polycaprolactone diol, and polyvalerolactone diol obtained by polycondensation reaction of at least one selected from the group consisting of an aromatic dicarboxylic acid such as terephthalic acid, isophthalic acid, and orthophthalic acid and ester thereof, and at least one aliphatic diol having 2 to 10 carbon atoms such as ethylene glycol, propylene glycol, 1,4-butanediol, 1,5-pentanediol, 1,6-hexanediol, 1,9-nonanediol, 3-methyl-1,5-pentanediol, and 2-methyl-1,8-octanediol.

Examples of the polyether diol used for producing the thermoplastic polyurethane resin can include polyethylene glycol, polypropylene glycol and polytetramethylene glycol.

Examples of the polycarbonate diol used for producing the thermoplastic polyurethane resin can include polycarbonate diol obtained by reacting at least one aliphatic diol such as 1,4-butanediol, 1,5-pentanediol, 1,6-hexanediol, or 1,8-octanediol with carbonic acid ester such as diphenyl carbonate or an alkyl carbonate, or phosgene.

The organic diisocyanate used for producing the thermoplastic polyurethane resin is not particularly limited, but is preferably at least one selected from the group consisting of an aromatic diisocyanate, an alicyclic diisocyanate, and an aliphatic diisocyanate, having a molecular weight of 500 or less. Specific examples of the organic diisocyanate can include 4,4'-diphenylmethane diisocyanate, toluene diisocyanate, p-phenylene diisocyanate, xylylene diisocyanate, naphthalene diisocyanate, hydrogenated 4,4'-diphenylmethane diisocyanate (4,4'-dicyclohexylmethane diisocyanate), isophorone diisocyanate, and hexamethylene diisocyanate. Among these, 4,4'-diphenylmethane diisocyanate is preferable.

As the chain extender used for producing the thermoplastic polyurethane resin, any chain extenders conventionally used for producing a thermoplastic polyurethane resin can be used, and the kind thereof is not particularly limited. Among these, the chain extender is preferably at least one selected from the group consisting of an aliphatic diol, an alicyclic diol, and an aromatic diol. Specific examples of the chain extender can include a diol such as ethylene glycol, diethylene glycol, 1,4-butanediol, 1,5-pentanediol, 2-methyl-1,3-propanediol, 1,6-hexanediol, neopentyl glycol, 1,9-nonanediol, cyclohexanediol, and 1,4-bis (β-hydroxyethoxy) benzene. Among these, an aliphatic diol having 2 to 6 carbon atoms are preferable, and 1,4-butanediol is more preferable. One of these chain extenders can be used alone or two or more thereof can be used in combination.

The thermoplastic polyurethane resin is preferably a thermoplastic polyurethane resin obtained by reacting a polymer diol, a chain extender, and an organic diisocyanate such that the number of moles of the polymer diol: the number of moles of the chain extender is in a range of 1:0.2 to 8, and [the total number of moles of the polymer diol and the chain extender] : [the number of moles of the organic diisocyanate] is in a range of 1:0.98 to 1.04. This makes it possible to smoothly produce an objective product such as a molded body or a multilayer structure without a rapid increase in melt viscosity at the time of melt molding of the resin composition of the present embodiment such as extrusion molding or injection molding, and further, the heat resistance of a product obtained thereby is improved.

The thermoplastic polyurethane resin preferably has a hardness (type A hardness; measured at 25°C) of 55 to 95. When the hardness of the thermoplastic polyurethane resin is 55 or more, the mechanical strength of a product such as a molded body or a multilayer structure obtained from the resin composition is improved. In addition, when the hardness of the thermoplastic polyurethane resin is 95 or less, the flexibility of a product such as a molded body or a multilayer structure obtained from the resin composition is increased.

The method for producing the thermoplastic polyurethane resin is not particularly limited, and it can be produced by any of a prepolymer method and a one shot method by using the above-mentioned polymer diol, organic diisocyanate, and chain extender and utilizing a known urethanization reaction. Among these, it is preferable to perform melt polymerization substantially in the absence of a solvent, and it is more preferable to produce it by performing continuous melt polymerization using a multi-screw extruder, particularly.

As the thermoplastic polyurethane resin, a commercially available resin can be used. Specific examples thereof can include "Elastollan (registered trademark)" (trade name) manufactured by BASF Polyurethane Elastomers Ltd., "Miractran (registered trademark)" (trade name) manufactured by Nippon Miractran Co., Ltd., "Resamine P" (trade name) manufactured by Dainichiseika Color & Chemicals Mfg. Co., Ltd., and "U-Fine (registered trademark) P" (trade name) manufactured by AGC Inc.

### [Hydrogenated Block Copolymer (C)]

The resin composition of the present embodiment preferably contains a hydrogenated block copolymer (C) from the viewpoint of facilitating the adjustment of hardness while maintaining excellent tensile properties and strong adhesive force.

The hydrogenated block copolymer (C) has a polymer block (C-1) containing a structural unit derived from an aromatic vinyl compound and a polymer block (C-2) containing a structural unit derived from a conjugated diene compound.

Further, the hydrogenated block copolymer (C) and the modified hydrogenated product (A) are different kinds of resins. The hydrogenated block copolymer (C) preferably does not have a carboxy group, an amino group, a hydroxy group, or a group derived from an acid anhydride. The hydrogenated block copolymer (C) can contain any one of an epoxy group, a silanol group, an aldehyde group, a carbonyl group, a nitro group, a cyano group, and an ether bond.

One of the hydrogenated block copolymers (C) can be used alone, or two or more thereof can be used.

### <Polymer Block (C-1)>

### [Aromatic Vinyl Compound]

The polymer block (C-1) contains a structural unit derived from an aromatic vinyl compound.

The structural unit constituting the polymer block (C-1), the content ratio of the structural unit, and the kind of the compound from which the structural unit is derived are the same as those of the polymer block (A-1) mentioned above.

### (Weight Average Molecular Weight of Polymer Block (C-1))

The weight average molecular weight (Mw) of the polymer block (C-1) is not particularly limited, but the weight average molecular weight of at least one polymer block (C-1) among the polymer blocks (C-1) contained in the hydrogenated block copolymer (C) is preferably 3,000 to 80,000, more preferably 4,000 to 70,000, further more preferably 5,000 to 60,000, and still further more preferably 6,000 to 50,000. When the hydrogenated block copolymer (C) has at least one polymer block (C-1) having a weight average molecular weight within the above range, the mechanical strength of the resin composition is further improved, and also, the moldability tends to be excellent.

### (Content Ratio of Polymer Block (C-1))

The upper limit of the content ratio of the polymer block (C-1) in 100% by mass of the hydrogenated block copolymer (C) is preferably 70% by mass or less, more preferably 65% by mass or less, further more preferably 40% by mass or less, and still further more preferably 35% by mass or less. When the content ratio of the polymer block (C-1) is 70% by mass or less, the resin composition easily exhibits appropriate flexibility, which is preferable. Further, the lower limit of the content ratio of the polymer block (C-1) in 100% by mass of the hydrogenated block copolymer (C) is preferably 5% by mass or more, more preferably 10% by mass or more, and further more preferably 15% by mass or more. When the content ratio of the polymer block (C-1) is 5% by mass or more, the mechanical strength such as tensile elongation of the resin composition is more easily improved, which is preferable.

### <Polymer Block (C-2)>

### [Conjugated Diene Compound]

The polymer block (C-2) contains a structural unit derived from a conjugated diene compound.

The structural unit constituting the polymer block (C-2), the content ratio of the structural unit, and the kind of the compound from which the structural unit is derived are the same as those of the polymer block (A-2) mentioned above.

On the other hand, from the viewpoint of production cost and physical property balance, the conjugated diene compound in the polymer block (C-2) is preferably at least one selected from the group consisting of isoprene, butadiene, and farnesene.

When isoprene and butadiene are used in combination, the blending ratio thereof [isoprene/butadiene] (mass ratio) is not particularly limited, but is preferably 5/95 to 95/5, more preferably 10/90 to 90/10, further more preferably 40/60 to 70/30, and still further more preferably 45/55 to 65/35. Note that the blending ratio [isoprene/butadiene] is preferably 5/95 to 95/5, more preferably 10/90 to 90/10, more preferably 20/80 to 80/20, further more preferably 30/70 to 70/30, further more preferably 40/60 to 70/30, and even further more preferably 45/55 to 55/45, in terms of molar ratio.

### (Vinyl Bonding Amount of Polymer Block (C-2))

The bonding form of the conjugated diene compound is not particularly limited as long as the effect of the present invention is not impaired.

In the hydrogenated block copolymer (C), for example, when the structural unit constituting the polymer block (C-2) is any one of an isoprene unit and a mixture unit of isoprene and butadiene, the bonding form of each of isoprene and butadiene can be a vinyl bond such as a 1,2-bond or a 1,4-bond in the case of butadiene, and a 1,2-bond, a 3,4-bond, or a 1,4-bond in the case of isoprene. Only one of these bonding forms can be present, or two or more thereof can be present. Among these, the 1, 2-bond and the 3,4-bond are defined as vinyl bonding units, and the content ratio of the vinyl bonding units is defined as the vinyl bonding amount. In this case, the content ratio of the vinyl bonding unit with respect to the total amount of the structural unit derived from isoprene and/or butadiene is defined as the vinyl bonding amount.

Further, in the hydrogenated block copolymer (C), for example, when the structural unit constituting the polymer block (C-2) is a β-farnesene unit, it can have a 1,2-bond, a 1,13-bond, or a 3,13-bond. Only one of these bonding forms can be present, or two or more thereof can be present. Among these, the 1,2-bond and the 3,13-bond are defined as vinyl bonding units, and the content ratio of the vinyl bonding units is defined as a vinyl bonding amount. In this case, the content ratio of the vinyl bonding unit with respect to the total amount of the structural unit derived from β-farnesene is defined as the vinyl bonding amount.

**In** the modified hydrogenated product (A), for example, when the structural unit constituting the polymer block (C-2) includes an isoprene unit and/or a butadiene unit and a β-farnesene unit, the vinyl bonding amount is the total of the content ratio of the vinyl bonding unit with respect to the total amount of the structural units derived from isoprene and/or butadiene and the content ratio of the vinyl bonding unit with respect to the total amount of the structural units derived from β-farnesene.

The lower limit of the vinyl bonding amount of the polymer block (C-2) is preferably 1 mol% or more, more preferably 3 mol% or more, further more preferably 5 mol% or more, and still further more preferably 6 mol% or more. When the lower limit of the vinyl bonding amount in the polymer block (C-2) is 1 mol% or more, the resin composition tends to exhibit more excellent tensile properties, which is preferable.

Further, the upper limit of the vinyl bonding amount in the polymer block (C-2) is preferably 85 mol% or less, more preferably 75 mol% or less, further more preferably 65 mol% or less, still further more preferably 55 mol% or less, and particularly preferably 45 mol% or less. When the realization of excellent adhesive force by improving the flexibility of the resin composition to improve the adhesion to an adherend is emphasized, the upper limit of the vinyl bonding amount in the polymer block (C-2) is more particularly preferably 35 mol% or less, further more particularly preferably 30 mol% or less, and most preferably 25 mol% or less. When the vinyl bonding amount in the polymer block (C-2) is 85 mol% or less, the resin composition tends to exhibit more excellent flexibility, which is preferable.

One of the hydrogenated block copolymers (C) can be used alone, or two or more thereof can be used. For example, when a molded body made of the resin composition of the present embodiment is used in a low-temperature environment or when the molded body is required to have high impact resistance, it is preferable to use at least one kind of the hydrogenated block copolymer (C) containing the polymer block (C-2) having a low vinyl bonding amount. The vinyl bonding amount in the polymer block (C-2) having a low vinyl bonding amount is preferably 1 to 30 mol%, more preferably 3 to 20 mol%, and further more preferably 5 to 10 mol%.

### (Weight Average Molecular Weight of Polymer Block (C-2))

The weight average molecular weight (Mw) of the polymer block (C-2) is determined by gel permeation chromatography (GPC) measurement.

Regarding the weight average molecular weight (Mw) of the polymer block (C-2), the weight average molecular weight of at least one polymer block (C-2) among the polymer blocks (C-2) contained in the hydrogenated block copolymer (C) is preferably 30,000 to 600,000, more preferably 40,000 to 500,000, further more preferably 45,000 to 450,000, and still further more preferably 50,000 to 400,000. When the hydrogenated block copolymer (C) has at least one polymer block (C-2) having a weight average molecular weight within the above range, the tensile properties of the resin composition are further improved, and the adhesive force tends to be excellent, which is preferable.

### (Content Ratio of Polymer Block (C-2))

The upper limit of the content ratio of the polymer block (C-2) in 100% by mass of the hydrogenated block copolymer (C) is preferably 95% by mass or less, more preferably 90% by mass or less, and further more preferably 85% by mass or less. When the content ratio of the polymer block (C-2) is 95% by mass or less, the resin composition easily exhibits excellent mechanical strength and moldability, which is preferable. Further, the lower limit of the content ratio of the polymer block (C-2) in 100% by mass of the hydrogenated block copolymer (C) is preferably 30% by mass or more, more preferably 45% by mass or more, further more preferably 60% by mass or more, and still further more preferably 70% by mass or more. When the content ratio of the polymer block (C-2) is 30% by mass or more, the resin composition easily exhibits excellent flexibility, which is preferable.

### (Hydrogenation Rate of Polymer Block (C-2))

From the viewpoint of the heat resistance and weather resistance of the resin composition, the lower limit of the hydrogenation rate of the carbon-carbon double bond in the polymer block (C-2) is preferably 80 mol% or more, more preferably 85 mol% or more, further more preferably 88 mol% or more, and still further more preferably 90 mol% or more. The upper limit of the hydrogenation rate is not particularly limited, and can be 100 mol% or less, 99.9 mol% or less, or 99.5 mol% or less. The hydrogenation rate of the carbon-carbon double bond in the polymer block (C-2) can be calculated by ¹H-NMR measurement of the polymer block before and after hydrogenation. Specifically, it is determined by the following formula. Hydrogenation rate (mol%) of hydrogenated block copolymer (C) = {1 - (number of moles of carbon-carbon double bond contained per 1 mole of hydrogenated block copolymer (C))/(number of moles of carbon-carbon double bond contained per 1 mole of hydrogenated block copolymer (C) before hydrogenation)} × 100

### (Bonding Mode of Polymer Block (C-1) and Polymer Block (C-2))

The bonding mode of the polymer block (C-1) and the polymer block (C-2) is the same as the bonding mode of the polymer block (A-1) and the polymer block (A-2) mentioned above.

### (Content Ratio of Polymer Blocks (C-1) and (C-2))

The hydrogenated block copolymer (C) can contain a polymer block other than the polymer blocks (C-1) and (C-2) or needs not contain the other polymer blocks, as long as the object and effect of the present invention are not impaired.

The lower limit of the total content ratio of the polymer block (C-1) and the polymer block (C-2) in 100% by mass of the hydrogenated block copolymer (C) is preferably 90% by mass or more, more preferably 95% by mass or more, and particularly preferably substantially 100% by mass. When the content ratio is 90% by mass or more, the resin composition tends to have excellent mechanical strength and moldability, which is preferable. In the hydrogenated block copolymer (C), the upper limit of the total content ratio of the polymer block (C-1) and the polymer block (C-2) is preferably 100% by mass or less.

### <Method for Producing Hydrogenated Block Copolymer (C)>

The hydrogenated block copolymer (C) can be produced by performing a polymerization reaction using at least an aromatic vinyl compound and a conjugated diene compound as monomers to obtain a block copolymer, and then hydrogenating the obtained block copolymer.

The block copolymer can be produced by the same method as the method for producing the block copolymer in the method for producing the modified hydrogenated product (A) mentioned above. Further, the hydrogenation method is also the same as the hydrogenation method in the production method of the modified hydrogenated product (A) mentioned above.

### <Weight Average Molecular Weight of Hydrogenated Block Copolymer (C)>

From the viewpoint of the mechanical strength of the resin composition, the lower limit of the weight average molecular weight of the hydrogenated block copolymer (C) is preferably 50,000 or more, more preferably 60,000 or more, further more preferably 70,000 or more, and still further more preferably 100,000 or more.

From the viewpoint of the moldability of the resin composition, the upper limit of the weight average molecular weight of the hydrogenated block copolymer (C) is preferably 500,000 or less, more preferably 450,000 or less, and further more preferably 400,000 or less.

### <Peak Top Intensity and Peak Top Temperature of tan δ of Hydrogenated Block Copolymer (C)>

The hydrogenated block copolymer (C) preferably has a peak top intensity of tan δ of 0.05 to 3.0 as measured in accordance with JIS K 7244-10:2005 under the conditions of a strain amount of 0.1%, a frequency of 1 Hz, a measurement temperature of -70 to +120°C, and a rate of temperature increase of 3°C/minute.

The peak top intensity of tan δ of the hydrogenated block copolymer (C) can be measured in the same manner as in the method described in the modified hydrogenated product (A).

Some of the hydrogenated block copolymers (C) have a peak top intensity of tan δ of 0.3 or more as a high value, 1.0 or more as a higher value, and 2.0 or more as an even higher value, as measured by the above method. Further, the upper limit of the peak top intensity of tan δ is not particularly limited, and can be 2.5 or less. It indicates that the higher the peak top intensity of tan δ, the more excellent the physical properties such as vibration-damping property at that temperature.

Further, the lower limit of the peak top temperature of tan δ of the hydrogenated block copolymer (C) is preferably -65°C or higher, more preferably -60°C or higher, further more preferably -55°C or higher. Further, the upper limit of the peak top temperature of tan δ can be +20°C or lower or +10°C or lower, as long as the effect of the present invention is not impaired. When the peak top temperature of tan δ of the hydrogenated block copolymer (C) is within the above range, it becomes easier for the resin composition to obtain sufficient adhesive force and tensile properties in a practical use environment, which is preferable.

The peak top intensity and peak top temperature of tan δ of the hydrogenated block copolymer (C) can be controlled by a method of, such as optimizing the selection and content ratio of the monomers used in the hydrogenated block copolymer (C) or suitably adjusting the vinyl bonding amount.

### <Glass Transition Temperature of Hydrogenated Block Copolymer (C)>

The glass transition temperature of the hydrogenated block copolymer (C) is preferably -70 to +20°C, more preferably -65 to +10°C, and further more preferably -60 to +5°C.

When the glass transition temperature of the hydrogenated block copolymer (C) is within the above range, it becomes easier for the resin composition to obtain sufficient adhesive force and tensile properties in a practical use environment, which is preferable.

### [Content of Each Component]

The mass ratio (A)/(B) of the modified hydrogenated product (A) to the resin (B) is 90/10 to 10/90.

When the mass ratio (A)/(B) is within the above numerical range, both tensile properties and adhesive force are excellent. From the viewpoint of easily exhibiting even more excellent tensile properties and strong adhesive force, the mass ratio (A)/(B) is more preferably 80/20 to 10/90, further more preferably 70/30 to 10/90, still further more preferably 60/40 to 10/90, and still further more preferably 55/45 to 10/90,.

When the resin composition of the present embodiment contains the hydrogenated block copolymer (C), the lower limit of the content of the hydrogenated block copolymer (C) is preferably 20 parts by mass or more, more preferably 50 parts by mass or more, and further more preferably 70 parts by mass or more, with respect to 100 parts by mass of the content of the modified hydrogenated product (A), from the viewpoint of easily exhibiting even stronger adhesive force.

In addition, when the resin composition of the present embodiment contains the hydrogenated block copolymer (C), the upper limit of the content of the hydrogenated block copolymer (C) is preferably 1000 parts by mass or less, more preferably 800 parts by mass or less, and further more preferably 700 parts by mass or less, with respect to 100 parts by mass of the content of the modified hydrogenated product (A), from the viewpoint of easily exhibiting even more excellent tensile properties.

When the resin composition of the present embodiment contains the hydrogenated block copolymer (C), the lower limit of the content of the hydrogenated block copolymer (C) is preferably 10 parts by mass or more, more preferably 20 parts by mass or more, and further more preferably 40 parts by mass or more, with respect to 100 parts by mass of the content of the resin (B), from the viewpoint of easily exhibiting even stronger adhesive force.

In addition, when the resin composition of the present embodiment contains the hydrogenated block copolymer (C), the upper limit of the content of the hydrogenated block copolymer (C) is preferably 300 parts by mass or less, more preferably 200 parts by mass or less, and further more preferably 150 parts by mass or less, with respect to 100 parts by mass of the content of the resin (B), from the viewpoint of easily exhibiting even more excellent tensile properties.

The lower limit of the content ratio of the modified hydrogenated product (A) in 100% by mass of the resin composition is preferably 5% by mass or more, more preferably 8% by mass or more, and further more preferably 12% by mass or more, from the viewpoint that the resin composition tends to exhibit an even stronger adhesive force.

Further, from the viewpoint of stably obtaining both good adhesive force and tensile properties, the upper limit of the content ratio of the modified hydrogenated product (A) in 100% by mass of the resin composition is preferably 70% by mass or less, more preferably 60% by mass or less, and further more preferably 50% by mass or less.

When the hydrogenated block copolymer (C) and a softener mentioned later are not contained, the total content ratio of the modified hydrogenated product (A) and the resin (B) in 100% by mass of the resin composition is preferably 95% by mass or more, more preferably 99% by mass or more, and further more preferably 99.5% by mass or more, and the upper limit can be 100% by mass or less.

When a softener mentioned later is not contained, the total content ratio of the modified hydrogenated product (A), the resin (B), and the hydrogenated block copolymer (C) in 100% by mass of the resin composition is preferably 95% by mass or more, more preferably 99% by mass or more, and further more preferably 99.5% by mass or more, and the upper limit can be 100% by mass or less.

When a softener mentioned later is contained, the total content ratio of the modified hydrogenated product (A), the resin (B), the hydrogenated block copolymer (C), and the softener in 100% by mass of the resin composition is preferably 95% by mass or more, more preferably 99% by mass or more, and still more preferably 99.5% by mass or more, and the upper limit can be 100% by mass or less.

### [Softener]

The resin composition of the present embodiment needs not contain a softener. On the other hand, from the viewpoint that the resin composition more easily exhibits excellent moldability and flexibility, the resin composition of the present embodiment can contain a softener. The softener is preferably used in the case where the resin composition contains the hydrogenated block copolymer (C). The softener can be used in the case where the resin composition does not contain the hydrogenated block copolymer (C).

As the softener, a softener generally used for rubber and plastics can be used. Examples of the softener include paraffine-based, naphthene-based, and aromatic-based process oils; a phthalic acid derivative such as dioctyl phthalate and dibutyl phthalate; a white oil; a mineral oil; liquid co-oligomers of ethylene and α-olefin; liquid paraffin; polybutene; and low molecular weight polyisobutylene.

From the viewpoint of compatibility between the modified hydrogenated product (A) and the resin (B) or compatibility between both the modified hydrogenated product (A) and the hydrogenated block copolymer (C) and the resin (B), the softener is preferably at least one selected from the group consisting of a paraffine-based process oil, a naphthene-based process oil, and an aromatic-based process oil.

When the resin composition contains the hydrogenated block copolymer (C) and the softener, the lower limit of the content of the softener is preferably 5 parts by mass or more, more preferably 30 parts by mass or more, further more preferably 50 parts by mass or more, and still further more preferably 80 parts by mass or more, with respect to 100 parts by mass of the content of the hydrogenated block copolymer (C), from the viewpoint of the molding processability of the resin composition. **In** addition, from the viewpoint of avoiding bleed-out of the softener from the resin composition, the upper limit of the content of the softener is preferably 200 parts by mass or less, more preferably 150 parts by mass or less, and further more preferably 120 parts by mass or less, with respect to 100 parts by mass of the content of the hydrogenated block copolymer (C).

### [Additive]

The resin composition of the present embodiment can contain an additive as long as the effect of the present invention is not impaired. Specifically, an additive can be contained in addition to the modified hydrogenated product (A) and the resin (B), an additive can be contained in addition to the modified hydrogenated product (A), the resin (B), and the hydrogenated block copolymer (C), an additive can be contained in addition to the modified hydrogenated product (A), the resin (B), and the softener, and an additive can be contained in addition to the modified hydrogenated product (A), the resin (B), the hydrogenated block copolymer (C), and the softener.

Examples of the additive include a thermoplastic polymer other than the modified hydrogenated product (A), the resin (B), and the hydrogenated block copolymer (C), an antioxidant, an inorganic filler, a tackifying resin, a light stabilizer, a processing aid, a flame retardant, an antistatic agent, a delustering agent, an anti-blocking agent, an ultraviolet absorber, a release agent, a foaming agent, an antibacterial agent, an antifungal agent, a fragrance, and a colorant such as a pigment or a dye.

One of the additives can be used alone or two or more thereof can be used.

### <Antioxidant>

The resin composition of the present embodiment preferably further contains an antioxidant.

Examples of the antioxidant include a hindered phenol-based, phosphorus-based, lactone-based, and hydroxyl-based antioxidants. Among these, a hindered phenol-based antioxidant is preferable.

When the antioxidant is contained, the content of the antioxidant is preferably within a range in which the resin composition is not colored during melt kneading. The content of the antioxidant is preferably 0.001 to 5 parts by mass with respect to 100 parts by mass of the total content of the modified hydrogenated product (A), the resin (B), and the hydrogenated block copolymer (C). Note that, when the resin composition of the present embodiment does not contain the hydrogenated block copolymer (C), the content of the antioxidant is preferably 0.001 to 5 parts by mass with respect to 100 parts by mass of the total content of the modified hydrogenated product (A) and the resin (B).

### [Method for Producing Resin Composition]

The method for producing the resin composition of the present embodiment is not particularly limited, and it can be produced by any method as long as it is a method capable of mixing the modified hydrogenated product (A) and the resin (B), and the hydrogenated block copolymer (C), the softener, and the additive which can be used as necessary, and a known means can be used.

For example, the resin composition can be produced by mixing the constituent components thereof using a mixer such as a Henschel mixer, a V blender, a ribbon blender, a tumbler blender, or a conical blender. In addition, after the mixing, it can be produced by melt kneading at about 80 to 350°C using a kneading apparatus such as a single-screw extruder, a twin-screw extruder, a kneader, a Banbury mixer, or a roll. From the viewpoint of easy-compatibilization of the constituent components of the resin composition, the melt kneading method is preferable.

### [Melt Flow Rate of Resin Composition]

The melt flow rate for the resin composition measured in accordance with JIS K 7210:2014 under conditions of a temperature of 230°C and a load of 21 N is 5 g/10 minutes or more. When the melt flow rate of the resin composition is 5 g/10 minutes or more, it has flexibility, excellent tensile properties are obtained, and adhesive force also tends to be excellent. In addition, the moldability of the resin composition is also improved.

From the viewpoint of achieving even more excellent tensile properties and adhesive force, the lower limit of the melt flow rate of the resin composition is preferably 10 g/10 minutes or more, more preferably 20 g/10 minutes or more, and further more preferably 30 g/10 minutes or more.

Further, from the viewpoint of tensile properties and moldability, the upper limit of the melt flow rate of the resin composition is preferably 200 g/10 minutes or less, more preferably 150 g/10 minutes or less, and further more preferably 100 g/10 minutes or less.

Preferable examples of the method for adjusting the melt flow rate of the resin composition to the above range include a method of appropriately setting the blending amounts of the modified hydrogenated product (A) and the resin (B), and the hydrogenated block copolymer (C) used as necessary, a method of adjusting the degree of polymerization of each resin component used in the resin composition, and a method of adjusting the kind of monomer used in each resin component.

### [Tensile Elongation at Break]

Regarding the resin composition of the present embodiment, the tensile elongation at break measured in accordance with ISO37:2017 is preferably 220 to 800%, more preferably 300 to 800%, further more preferably 400 to 750%, and still further more preferably 500 to 700%.

When the tensile elongation at break of the resin composition is within the above numerical range, the adhesive force is even more excellent, which is preferable.

The tensile elongation at break can be measured in accordance with the method described in Examples.

### [Tensile Strength at Break]

Regarding the resin composition of the present embodiment, the lower limit of the tensile strength at break measured in accordance with ISO37:2017 is preferably 1.0 MPa or more, more preferably 1.5 MPa or more, and further more preferably 2.0 MPa or more. Further, the upper limit of the tensile strength at break of the resin composition of the present embodiment is not particularly limited, and can be, for example, 200 MPa or less.

When the tensile strength at break of the resin composition is within the above numerical range, the adhesive force is even more excellent, which is preferable.

The tensile strength at break can be measured in accordance with the method described in Examples.

### [Peel Strength]

Regarding the resin composition of the present embodiment, the peel strength measured in accordance with JIS K 6854-2:1999 is preferably 5 N/25 mm or more, more preferably 10 N/25 mm or more, further more preferably 15 N/25 mm or more. In addition, the upper limit of the tensile strength at break of the resin composition of the present embodiment is not particularly limited, and can be, for example, 200 N/25 mm or less.

When the peel strength of the resin composition is within the above numerical range, the adhesive force can withstand practical use, which is preferable.

The peel strength can be measured in accordance with the method described in Examples.

Regarding the resin composition according to the present embodiment, the peel strength with respect to the synthetic resin is preferably 5 N/25 mm or more. Regarding the resin composition according to the present embodiment, the peel strength with respect to aluminum as the metal is preferably 3 N/25 mm or more, and more preferably 5 N/25 mm or more. Regarding the resin composition according to the present embodiment, the peel strength with respect to SUS as the metal is preferably 3 N/25 mm or more, and more preferably 5 N/25 mm or more.

### <Molded Body>

The resin composition of the present embodiment can be formed into various molded bodies by a melt kneading molding apparatus. In addition, the resin composition of the present embodiment can be formed into various molded bodies by an injection molding method, an injection compression molding method, an extrusion molding method, a blow molding method, a press molding method, a vacuum molding method, a foam molding method, or the like after the resin composition is formed into a bale, a crumb, a pellet, or the like.

From the viewpoint of achieving both even more excellent tensile properties and adhesive force, the molding temperature of the resin composition, specifically, for example, the cylinder temperature of an extruder during injection molding or extrusion molding, is preferably 160 to 250°C, and more preferably 180 to 230°C. The cylinder temperature can be appropriately set as long as the effect of the present invention is not excessively impaired.

The shape, structure, use, and the like of the molded body containing the resin composition of the present embodiment are not particularly limited. On the other hand, since the resin composition of the present embodiment has excellent tensile properties and strong adhesive force to a synthetic resin, a metal, and the like, the resin composition of the present embodiment can be suitably used as a part of a multilayer structure.

### [Tensile Elongation at Break]

Regarding the molded body containing the resin composition of the present embodiment, the tensile elongation at break measured in accordance with ISO37:2017 is preferably 220 to 800%, more preferably 300 to 800%, further more preferably 400 to 750%, and still further more preferably 500 to 700%.

When the tensile elongation at break of the resin composition is within the above numerical range, the adhesive force is even more excellent, which is preferable.

The tensile elongation at break can be measured in accordance with the method described in Examples.

### [Tensile Strength at Break]

Regarding the molded body containing the resin composition of the present embodiment, the lower limit of the tensile strength at break measured in accordance with ISO37:2017 is preferably 1.0 MPa or more, more preferably 1.5 MPa or more, and further more preferably 2.0 MPa or more. Further, the upper limit of the tensile strength at break of the molded body containing the resin composition of the present embodiment is not particularly limited and can be, for example, 200 MPa or less.

When the tensile strength at break of the molded body containing the resin composition is within the above numerical range, the adhesive force is even more excellent, which is preferable.

The tensile strength at break can be measured in accordance with the method described in Examples.

### [Peel Strength]

Regarding the molded body containing the resin composition of the present embodiment, the peel strength measured in accordance with JIS K 6854-2:1999 is preferably 5 N/25 mm or more, more preferably 10 N/25 mm or more, and further more preferably 15 N/25 mm or more. Further, the upper limit of the tensile strength at break of the molded body containing the resin composition of the present embodiment is not particularly limited, and can be, for example, 200 N/25 mm or less.

When the peel strength of the molded body containing the resin composition is within the above numerical range, the adhesive force can withstand practical use, which is preferable.

The peel strength can be measured in accordance with the method described in Examples.

The molded body containing the resin composition of the present embodiment preferably has the peel strength to the synthetic resin of 5 N/25 mm or more. Regarding the resin composition according to the present embodiment, the peel strength to aluminum as the metal is preferably 3 N/25 mm or more, and more preferably 5 N/25 mm or more. Regarding the resin composition according to the present embodiment, the peel strength to SUS as the metal is preferably 3 N/25 mm or more, and more preferably 5 N/25 mm or more.

### <Multilayer Structure>

The multilayer structure has a layer formed of the resin composition of the present embodiment and a layer formed of a material other than the resin composition (hereinafter referred to as "other layer").

The multilayer structure can have each of at least one layer formed of the resin composition and at least one other layer, and can have a plurality of layers. In addition, when the multilayer structure has a plurality of other layers, the plurality of other layers can be layers made of the same material or can be layers made of different materials.

The resin composition of the present embodiment exhibits a strong adhesive force. Therefore, in the multilayer structure, the layer formed of the resin composition of the present embodiment is an adhesive layer, and the other layer is adherend.

Examples of the material constituting the other layer as an adherend include a synthetic resin, a ceramic, a metal, and a fabric. One of the materials constituting the other layer can be used alone or two or more thereof can be used. Among these, the material constituting the other layer is preferably at least one selected from the group consisting of a synthetic resin and a metal.

Examples of the synthetic resin that can be used in the multilayer structure of the present embodiment include a polar resin such as a polyamide resin, a polyurethane resin, a polyester resin, a polycarbonate resin, a polyphenylene sulfide resin, a polyacrylate resin, a polymethacrylate resin, a polyether resin, a (meth) acrylonitrile-butadiene-styrene resin, a (meth) acrylonitrile-styrene resin, a (meth) acrylic acid ester-butadiene-styrene resin, a (meth) acrylic acid ester-styrene resin, a methyl (meth) acrylic acid ester-butadiene-styrene resin, an epoxy resin, a phenol resin, a diallyl phthalate resin, a polyimide resin, a melamine resin, a polyacetal resin, a polysulfone resin, a polyethersulfone resin, a polyetherimide resin, a polyphenylene ether resin, a polyarylate resin, a polyetheretherketone resin, a polystyrene resin, a rubber-reinforced polystyrene resin, and a syndiotactic polystyrene resin; and a nonpolar resin such as a polyolefin resin. One of these synthetic resins can be used alone or two or more thereof can be used in combination.

Examples of the polyamide resin include polyamide 6 (PA6) and polyamide 66 (PA66).

Examples of the polyolefin resin include a polyolefin resin such as polyethylene, polypropylene, polybutene-1, polyhexene-1, poly-3-methyl-butene-1, poly-4-methyl-pentene-1, a copolymer of ethylene and one or two or more of α-olefins having 3 to 20 carbon atoms (for example, propylene, 1-butene, 1-pentene, 1-hexene, 1-heptene, 1-octene, 1-decene, 3-methyl-1-butene, 4-methyl-1-pentene, 6-methyl-1-heptene, isooctene, isooctadiene, decadiene, and the like), an ethylene-propylene-diene copolymer (EPDM), an ethylene-vinyl acetate copolymer, and an ethylene-acrylic acid copolymer.

As necessary, an additive can be added to the layer formed of the synthetic resin as long as the object of the present invention is not impaired. Examples of the additive include a heat stabilizer, a light stabilizer, an ultraviolet absorber, an antioxidant, a lubricant, a colorant, an antistatic agent, a flame retardant, a water repellent, a waterproof agent, a hydrophilicity imparting agent, an electrical conductivity imparting agent, a thermal conductivity imparting agent, an electromagnetic wave shielding property imparting agent, a light transmittance adjusting agent, a fluorescent agent, a sliding property imparting agent, a transparency imparting agent, an anti-blocking agent, a metal deactivator, and an antibacterial agent.

The ceramics that can be used in the multilayer structure of the present embodiment means a non-metal-based inorganic material, and examples thereof include a metal oxide, a metal carbide, and a metal nitride. Examples thereof include glass, cements, alumina, zirconia, zinc oxide-based ceramics, barium titanate, lead zirconate titanate, silicon carbide, silicon nitride, and ferrites.

Examples of the metal that can be used in the multilayer structure of the present embodiment include iron, copper, aluminum, magnesium, nickel, chromium, zinc, and alloy containing these as components. The metal that can be used for the multilayer structure are preferably at least one selected from aluminum alloy and stainless steel. In addition, the layer formed of the metal can be a layer having a metal surface formed by plating such as copper-plating, nickel-plating, chromium-plating, tin-plating, zinc-plating, platinum-plating, gold-plating, or silver-plating.

The kind of cloth of the fabric that can be used in the multilayer structure of the present embodiment is not particularly limited, and examples thereof include woven-fabric, knitted fabric, felt, and nonwoven fabric.

Further, the material of the fabric can be a natural fiber, a synthetic fiber, or a combination of a natural fiber and a synthetic fiber. Although not particularly limited, examples of the natural fiber include cotton, silk, hemp, and wool.

Further, examples of the synthetic fiber include a polyester fiber, an acrylic fiber (polyacrylonitrile), a polyurethane fiber, a polyamide fiber, a polyolefin fiber, and a vinylon fiber. Examples of the polyamide fiber include Nylon 6 and Nylon 66. Examples of the polyolefin fiber include a polyethylene fiber and a polypropylene fiber.

### [Method for Producing Multilayer Structure]

The method for producing the multilayer structure of the present invention is not particularly limited, but it is preferably produced by melt lamination molding the resin composition of the present embodiment to the other materials. Examples thereof include a molding method such as an injection insert molding method, an extrusion lamination method, a coextrusion molding method, a calender molding method, a slush molding method, a press molding method, and a melt casting method.

For example, when the multilayer structure is produced by an injection insert molding method, a method is employed in which an adherend formed into a predetermined shape and size in advance is placed in a mold, and the resin composition of the present embodiment is injection-molded therein to produce the multilayer structure.

When the multilayer structure is produced by the extrusion lamination method, the multilayer structure can also be produced by directly extruding the resin composition of the present embodiment in a molten state, which is extruded from a die having a predetermined shape attached to an extruder, onto a surface or an edge of an adherend which has been formed into a predetermined shape and size in advance.

When the multilayer structure is produced by the coextrusion molding method, the multilayer structure can also be produced by simultaneously extruding molten resins using two extruders.

When the multilayer structure is produced by the calender molding method, the multilayer structure can also be produced by melting and rolling the resin composition of the present embodiment with a heating roll, passing it through several rolls to get it into a molten state, and heat-fusing it with the surface of an adherend formed into a predetermined shape and size in advance.

When a multilayer structure is produced by a press molding method, a molded body made of the resin composition of the present invention is molded in advance by an injection molding method or an extrusion molding method, and the molded body is heated and pressurized on an adherend formed into a predetermined shape and size in advance by using a press molding apparatus or the like to produce the multilayer structure. Such a molding method is particularly suitable when the adherend is a ceramic or a metal.

As the molding method by melt lamination molding, an injection insert molding method is preferable.

Particularly, the multilayer structure of the present embodiment is preferably produced by a method of inj ection-insert-molding the resin composition onto a layer formed of a material other than the resin composition, and more preferably produced by a method of inj ection-insert-molding the resin composition at a resin temperature of 160 to 250°C.

The injection molding temperature in the injection insert molding method is preferably 180°C or higher, and more preferably 200°C or higher, from the viewpoint of obtaining sufficient adhesive force. In addition, it is preferably 240°C or lower, and more preferably 230°C or lower, from the viewpoint that both tensile properties and strong adhesive force can be achieved and deterioration of hue due to high temperature of the resin composition is prevented.

In the resin composition of the present embodiment, particularly, when a thermoplastic polyurethane resin is used as the resin (B), the resin composition tends to have a change in hue and deterioration in tensile properties due to high temperature, and the like. Conventionally, a resin composition constituting an adhesive layer is required to be injection-insert-molded at a high temperature exceeding 250°C in order to obtain an adhesive force, and therefore, a change in hue, deterioration in tensile properties, and the like tend to occur. On the other hand, when the conventional resin composition is injection-insert-molded at 250°C or lower, sufficient adhesive force cannot be obtained.

However, when the resin composition of the present embodiment is injection-molded preferably at a resin temperature of 160 to 250°C, it is possible to suppress a change in hue, deterioration in tensile properties, and the like in the resin composition while exhibiting a strong adhesive force, and therefore, the effect of the present invention is more remarkably exhibited. Note that the resin temperature at the time of inj ection molding can be appropriately set as long as the effect of the present invention is not excessively impaired.

Further, when the adherend is a synthetic resin, both of them can be melted simultaneously and subjected to coextrusion molding or coinjection molding. Further, one of them can be molded in advance, and then melt-coated or solution-coated thereon. **In** addition, two color molding, insert molding, or the like can be employed.

### <Use>

The resin composition of the present embodiment can be widely applied to various uses. For example, a multilayer structure used by adhering the resin composition of the present embodiment to various housing materials can be mentioned as an example. As a raw material of the housing material, a synthetic resin, a synthetic resin containing a glass fiber, or a light metal such as aluminum or magnesium alloy is generally used. Preferable embodiments of the housing material include a housing material for electronic and electrical equipment, office automation equipment, a home electrical appliance, a sporting good, an electric power tool, an automobile member, and the like. More specifically, preferable embodiments are a housing for a large display, a laptop computer, a portable phone, a portable information terminal, an electronic dictionary, a video camera, a digital still camera, a portable radio cassette player, an inverter, a power tool, and the like. When the resin composition of the present embodiment is adhered to these housing materials, it can be used as the multilayer structure. In the multilayer structure, the layer made of the resin composition of the present embodiment is preferably used as an impact mitigation material, a covering material having an anti-slip function, a waterproof material, a design material, and the like.

Further, in another preferable embodiment, the resin composition of the present embodiment is used as a sealing material. Examples of the sealing material include a sealing material for a bonded portion in a molded body, a structure, or the like to which a transparent member represented by glass or the like is adhered. As the transparent member, a member made of a resin such as polycarbonate or PMMA is also preferably used. Specific examples of the bonded portion of the molded body and the structure to which the transparent member is adhered include a bonded portion between glass and an aluminum sash in a window of an architectural structure, a bonded portion between glass and a metal opening part or the like in an automobile, and a bonded portion between glass and a metal frame body in a solar cell module or the like. The resin composition of the present embodiment can be preferably used as a sealing material to be applied to the above-mentioned bonded portion.

**In** still another preferable embodiment, the resin composition of the present embodiment can be preferably used for a separator for a secondary cell and the like. The separator for a secondary cell is not particularly limited, but preferable examples thereof include a separator for a secondary cell used in various information terminal devices such as a laptop computer, a portable phone, and a video camera, a hybrid vehicle, and a fuel cell vehicle. Examples

Hereinafter, the present invention is specifically described with reference to Examples and Comparative Examples, but the present invention is not limited thereto.

Note that, β-farnesene (purity of 97.6% by mass, manufactured by Amyris, Inc.) was purified with a molecular sieve of 3 Å and distilled under a nitrogen gas atmosphere to remove hydrocarbon-based impurity such as zingiberene, bisabolene, farnesene epoxide, a farnesol isomer, E,E-farnesol, squalene, ergosterol and several kinds of dimers of farnesene, and then used for the following polymerization.

### <Each Component>

Each component used in Examples and Comparative Examples is as follows.

### [Modified Hydrogenated Product (A)]

(A1) to (A4): modified hydrogenated products of Production Examples 1-1 to 1-4 mentioned later
(A5): maleic anhydride-modified ethylene-butene copolymer (trade name: TAFMER (registered trademark) MH5020, manufactured by Mitsui Chemicals, Inc., modification amount: 1.0 phr, melt flow rate: 1.2 g/10 minutes (catalog value, ASTM D1238, 230°C))
(A6): maleic anhydride-modified polypropylene (trade name: ADMER (registered trademark) QF500, manufactured by Mitsui Chemicals, Inc., modification amount: 0.8 phr)
Note that (A4), (A5), and (A6) are for comparative examples.

### [Resin (B)]

(B1): thermoplastic polyurethane resin (trade name: Elastran (registered trademark) C80A, manufactured by BASF Japan Ltd., type A hardness: 80)
(B2) to (B4): acrylic-based block copolymers of Production Examples 2-1 to 2-4 mentioned later

### [Hydrogenated Block Copolymer (C)]

(C1) to (C5): hydrogenated block copolymers of Production Examples 3-1 to 3-5 mentioned later

### [Softener]

Softener: paraffine-based process oil (trade name: Diana Process Oil PW-90, manufactured by Idemitsu Kosan Co., Ltd.)

### [Antioxidant]

Hindered phenol-based antioxidant (trade name: ADEKASTAB AO-60, manufactured by ADEKA CORPORATION)

### <Measurement Method>

In addition, details of each measurement method in Production Examples are as follows.

### (1) Content of Polymer Block

### [Modified Hydrogenated Product (A) and Hydrogenated Block Copolymer (C)]

The contents of the polymer block (A-1) and the polymer block (C-1) were measured as follows.

The modified hydrogenated product (A) and the hydrogenated block copolymer (C) were each dissolved in CDCl₃ and subjected to ¹H-NMR measurement [apparatus: "AVANCE 400 Nanobay" (manufactured by Bruker), measurement temperature: 30°C], and the content of the polymer block was calculated from the ratio of the peak area derived from styrene to the peak area derived from isoprene and/or butadiene, or the ratio of the peak area derived from styrene to the peak area derived from farnesene.

### [Resin (B): Acrylic-Based Block Copolymer]

The contents of the polymer block (E1) and the polymer block (D1) constituting the acrylic-based block copolymer were measured and calculated as follows by ¹H-NMR measurement [apparatus: nuclear magnetic resonance apparatus "JNM ECX400" (manufactured by JEOL Ltd.), measurement temperature: 30°C, deuterated solvent: deuterated chloroform]. The mass ratio (E1)/(D1) was calculated from the calculated contents of the polymer block (E1) and the polymer block (D1).

In the ¹H-NMR spectrum, signals near 3.6 ppm and 3.7 ppm were assigned to an ester group of a methyl methacrylate unit (-O-CH₃) and an ester group of a methyl acrylate unit (-O-CH₃), respectively, a signal near 4.0 ppm was assigned to an ester group of an n-butyl acrylate unit (-O-CH₂-CH₂-CH₂-CH₃) or an ester group of a 2-ethylhexyl acrylate unit (-O-CH₂-CH (-CH₂-CH₃) -CH₂-CH₂-CH₂-CH₃), and the molar ratio of each monomer unit was determined from the ratio of these integral values, and the content of each polymer block was calculated by converting this into a mass ratio based on the molecular weight of the monomer unit.

### (2) Weight Average Molecular Weight

### [Modified Hydrogenated Product (A) and Hydrogenated Block Copolymer (C)]

The weight average molecular weights of the polymer block (A-1), the polymer block (A-2), the polymer block (C-1), the polymer block (C-2), the modified hydrogenated product (A), and the hydrogenated block copolymer (C) were measured as follows.

The weight average molecular weights (Mw) in terms of polystyrene of the modified hydrogenated product (A) and the hydrogenated block copolymer (C) were determined by gel permeation chromatography (GPC) measurement under the following conditions.

Further, the weight average molecular weight (Mw) of each polymer block was determined by measuring a sampled liquid by GPC measurement under the following conditions every time the polymerization of each polymer block was completed in the production step.

### <GPC Measurement Apparatus and Measurement Conditions>

· Apparatus: GPC apparatus "HLC-8020" manufactured by TOSOH CORPORATION
· Separation column: two "TSKgel G4000HX" columns manufactured by TOSOH CORPORATION were connected in series.
· Eluent: tetrahydrofuran
· Eluent flow rate: 0.7 mL/minute
· Sample concentration: 5 mg/10 mL
· Column temperature: 40°C
· Detector: differential refractive index (RI) detector
· Calibration curve: prepared using standard polystyrene

### [Resin (B): Acrylic-Based Block Copolymer]

The peak top molecular weight (Mp) and the molecular weight distribution (Mw/Mn) of the acrylic-based block copolymer were determined by gel permeation chromatography (GPC) in terms of standard polystyrene molecular weight by measuring by GPC measurement under the following conditions.

### <GPC Measurement Apparatus and Measurement Conditions>

· Apparatus: GPC apparatus "GPC8020" manufactured by TOSOH CORPORATION
· Separation column: "TSKgel GMHXL", "G4000HXL" and "G5000HXL" manufactured by TOSOH CORPORATION were connected in series.
· Eluent: tetrahydrofuran
· Eluent flow rate: 1.0 mL/minute
· Sample concentration: 5 mg/10 mL
· Column temperature: 40°C
· Detector: "RI-8020" manufactured by TOSOH CORPORATION
· Calibration curve: prepared using standard polystyrene

### (3) Hydrogenation Rate

The hydrogenation rates of the modified hydrogenated product (A) and the hydrogenated block copolymer (C) were measured as follows.

The modified hydrogenated product(A) before modification and the hydrogenated block copolymer (C) before and after hydrogenation were each dissolved in CDCl₃, and subjected to ¹H-NMR measurement [apparatus: "AVANCE 400 Nanobay" (manufactured by Bruker), measurement temperature: 30°C].

The hydrogenation rates of the carbon-carbon double bond in the structural unit derived from the conjugated diene compound in the modified hydrogenated product (A) before modification and the hydrogenated block copolymer (C) were calculated by the following formulas from the peak of the proton of the carbon-carbon double bond appearing at 4.5 to 6.0 ppm in the obtained spectrum. Hydrogenation rate (mol%) of modified hydrogenated product(A) before modification = {1 - (number of moles of carbon-carbon double bond contained per 1 mole of modified hydrogenated product (A) before modification)/(number of moles of carbon-carbon double bond contained per 1 mole of modified hydrogenated product (A) before modification before hydrogenation)} × 100 Hydrogenation rate (mol%) of hydrogenated block copolymer (C) = {1 - (number of moles of carbon-carbon double bond contained per 1 mole of hydrogenated block copolymer (C))/(number of moles of carbon-carbon double bond contained per 1 mole of hydrogenated block copolymer (C) before hydrogenation)} × 100

The calculated hydrogenation rate of the modified hydrogenated product (A) before modification was shown in Table 2 as "Hydrogenation Rate (mol%) in Polymer Block (A-2)". The calculated hydrogenation rate of the hydrogenated block copolymer (C) was shown in Table 5 as "Hydrogenation Rate (mol%) in Polymer Block (C-2)".

Note that the hydrogenation rate does not change before and after the modification.

### (4) Vinyl Bonding Amount

The vinyl bonding amounts of the polymer block (A-2) and the polymer block (C-2) were measured as follows.

The modified hydrogenated product (A) before hydrogenation and the hydrogenated block copolymer (C) before hydrogenation were each dissolved in CDCl₃ and subjected to ¹H-NMR measurement [apparatus: "AVANCE 400 Nanobay" (manufactured by Bruker), measurement temperature: 30°C].

In the cases of (A1) to (A4), (C1), (C3), and (C4), the vinyl bonding amount (the total content of the 3,4-bond unit and the 1,2-bond unit) was calculated from the ratio of the peak areas corresponding to the 3,4-bond unit and the 1,2-bond unit in the isoprene structural unit and the 1,2-bond unit in the butadiene structural unit to the total peak areas of the structural unit derived from isoprene and/or butadiene.

In the case of (C2), the vinyl bonding amount was calculated from the ratio of the peak areas corresponding to the 3,13-bond unit and the 1,2-bond unit in β-farnesene to the total peak areas of the structural unit derived from β-farnesene.

In the case of (C5), the vinyl bonding amount was calculated from the ratio of the peak areas corresponding to the 1,2-bond unit in the butadiene structural unit to the total peak areas of the structural unit derived from isoprene and/or butadiene, and the ratio of the peak areas corresponding to the 3,13-bond unit and the 1,2-bond unit in β-farnesene to the total peak areas of the structural unit derived from β-farnesene.

### (5) (Melt Flow Rate (MFR))

The outflow rate (g/10 minutes) of the modified hydrogenated product (A) was measured using a melt indexer under conditions of a temperature of 230°C and a load of 21 N in accordance with JIS K 7210:2014.

### (6) Glass Transition Temperature

The glass transition temperatures of the modified hydrogenated product (A) and the hydrogenated block copolymer (C) were measured as follows.

The measurement was performed using a DSC measurement apparatus (DSC6200, manufactured by Hitachi High-Tech Corporation) under the conditions of a temperature range of -100°C to +350°C and a rate of temperature increase of 20°C/minute, and the temperature at the inflection point of the baseline shift due to glass transition was taken as the glass transition temperature.

### (7) tan δ Peak Top Temperature and tan δ Peak Top Intensity

The tan δ peak top temperature and the tan δ peak top intensity of the modified hydrogenated product (A) and the hydrogenated block copolymer (C) were measured as follows.

The modified hydrogenated product (A) and the hydrogenated block copolymer (C) were each pressed at a temperature of 230°C and a pressure of 10 MPa for 3 minutes using a press molding apparatus "NF-50T" (manufactured by Shinto Metal Industries, Ltd.) to produce a sheet having a thickness of 1.0 mm, and the sheet was cut into a disc shape having a diameter of 8 mm to obtain a test piece.

As a measurement apparatus, based on JIS K7244-10:2005, a rotational rheometer "ARES-G2" (manufactured by TA Instruments), which is a distortion control type dynamic viscoelastometer, was used. The test piece was sandwiched between flat plates each having a diameter of 8 mm, it was vibrated at a frequency of 1 Hz with a distortion amount of 0.1%, the temperature was raised from -70°C to 120°C at a rate of 3°C/minute, and it was tested.

The temperature at which the maximum peak intensity was obtained (peak top temperature) and the maximum peak intensity of tan δ (peak top intensity) were determined by the test.

### (8) Maleic Anhydride Modification Amount (Content of Functional Group (phr))

5 g of the modified hydrogenated product (A) was dissolved in 180 ml of toluene, 20 ml of ethanol was added thereto, and it was titrated with 0.1 mol/L of potassium hydroxide solution, and the modification amount was calculated using the following calculation formula. Maleic anhydride modification amount (phr) = titration amount × 5.611/sample amount × 98 × 100/56.11 × 1000

### <Production Examples>

### [Production Example 1-1]

### Modified Hydrogenated Product (A1)

### (1) Hydrogenated Block Copolymer

A nitrogen-substituted and dried pressure-resistant container was charged with 50 kg of cyclohexane (solvent) dried with molecular sieves A4 and 0.07 kg of cyclohexane solution of sec-butyllithium having a concentration of a 10.5% by mass as an anionic polymerization initiator (substantial addition amount of sec-butyllithium: 7.4 g).

After the inside temperature of the pressure-resistant container was raised to 50°C, 1.00 kg of styrene (first time) was added and polymerized for 60 minutes, and then the temperature was reduced to 40°C, and 0.033 kg of 2,2-di(2-tetrahydrofuryl) propane (DTHFP) was added as a Lewis base, and then a mixed liquid of 8.17 kg of isoprene and 6.49 kg of butadiene was added over 5 hours, followed by polymerization for 2 hours. After that, the temperature was raised to 50°C, and 1.00 kg of styrene (second time) was added and polymerized for 30 minutes, and methanol was added to stop the reaction to obtain a reaction liquid containing a triblock copolymer of polystyrene-poly(isoprene/butadiene)-polystyrene.

A Ziegler-based catalyst formed from nickel octylate and trimethylaluminum (Al/Ni-based Ziegler catalyst) was added to the reaction liquid under a hydrogen atmosphere, and it was reacted at 80°C for 5 hours under a hydrogen pressure of 1 MPa. After the reaction liquid was allowed to cool and depressurized, the Ziegler-based catalyst was removed by washing with water, and vacuum drying was performed to obtain a hydrogenated product of a triblock copolymer of polystyrene-poly(isoprene/butadiene)-polystyrene.

### (2) Modified Hydrogenated Product

Using a twin-screw extruder "ZSK26mc" (26 mmφ, L/D = 56) manufactured by Coperion GmbH under the following extrusion conditions, 10 kg of the hydrogenated product obtained above, 0.01 kg of 2,5-dimethyl-2,5-di(t-butylperoxy) hexane (PERHEXA 25B-40, manufactured by NOF Corporation) as a radical initiator, and 0.1 kg of maleic anhydride as a modifying agent were blended, melted, and subjected to a modification reaction to obtain a modified hydrogenated product (A1).

Respective components and the used amounts thereof were shown in Table 1. Further, the results of the physical property evaluation were shown in Table 2.

### [Production Examples 1-2 to 1-4]

### Modified Hydrogenated Products (A2) to (A4)

Modified hydrogenated products (A2) to (A4) were obtained in the same manner as in Production Example 1 except that respective components and the used amounts thereof were changed as shown in Table 1. Further, the results of the physical property evaluation are shown in Table 2.

### [Production Example 2-1]

### Acrylic-Based Block Copolymer (B2)

(Step 1) 50.0 kg of toluene and 0.0998 kg of 1,2-dimethoxyethane were added to a nitrogen-purged and dried pressure-resistant container with stirring at room temperature (23°C), then 0.820 kg of a toluene solution containing 412 mmol of isobutyl bis(2,6-di-t-butyl-4-methylphenoxy) aluminum was added, and further 0.121 kg of a cyclohexane solution of sec-butyllithium containing 206 mmol of sec-butyllithium was added.
(Step 2) Subsequently, 1.47 kg of methyl methacrylate was added thereto under stirring at room temperature, and stirring was further continued for 60 minutes. The reaction liquid was initially colored yellow, but became colorless after stirring for 60 minutes.
(Step 3) Thereafter, the internal temperature of the polymerization liquid was cooled to -30°C, 6.33 kg of n-butyl acrylate was added dropwise over 4 hours under stirring, and after completion of the dropwise addition, stirring was further continued for 5 minutes at -30°C.
(Step 4) Thereafter, 1.20 kg of methyl methacrylate was added thereto, and it was stirred overnight at room temperature.
(Step 5) 0.370 kg of methanol was added to stop the polymerization reaction, and the obtained reaction liquid was poured into methanol with stirring to precipitate a white precipitate. The obtained white precipitate was collected and dried to obtain an acrylic-based block copolymer (B2).

Respective components, the used amounts thereof, and the results of the physical property evaluation were shown in Table 3.

### [Production Examples 2-2 to 2-4]

### Acrylic-Based Block Copolymers (B3) and (B4)

Acrylic-based block copolymers (B3), (B4), and (B5) were obtained in the same manner as in Production Example 2-1 except that respective components and the used amounts thereof were changed as shown in Table 3. Further, the results of the physical property evaluation were shown in Table 3.

### [Production Example 3-1]

### Hydrogenated Block Copolymer (C1)

A nitrogen-purged and dried pressure-resistant container was charged with 50 kg of cyclohexane (solvent) dried with molecular sieves A4 and 0.03 kg of a cyclohexane solution of sec-butyllithium having a concentration of 10.5% by mass as an anionic polymerization initiator (substantial addition amount of sec-butyllithium: 3.2 g).

After the inside temperature of the pressure-resistant container was raised to 50°C, 1.32 kg of styrene (first time) was added and polymerized for 60 minutes, and then a mixed liquid of 3.44 kg of isoprene and 2.73 kg of butadiene was added over 5 hours and polymerized for 2 hours. After that, 1.32 kg of styrene (second time) was added and polymerized for 60 minutes, and methanol was added to stop the reaction to obtain a reaction liquid containing a triblock copolymer of polystyrene-poly(isoprene/butadiene)-polystyrene.

A Ziegler-based catalyst formed from nickel octylate and trimethylaluminum (Al/Ni-based Ziegler catalyst) as a hydrogenation catalyst was added to the reaction liquid under a hydrogen atmosphere, and it was reacted at 80°C for 5 hours under a hydrogen pressure of 1 MPa. After the reaction liquid was allowed to cool and depressurized, the Ziegler-based catalyst was removed by washing with water, and vacuum drying was performed to obtain a hydrogenated block copolymer (C1) of a triblock copolymer of polystyrenepoly(isoprene/butadiene)-polystyrene.

Respective components and the used amounts thereof were shown in Table 4. Further, the results of the physical property evaluation were shown in Table 5.

### [Production Examples 3-2 and 3-3]

### Hydrogenated Block Copolymers (C2), (C3)

The hydrogenated block copolymers (C2) and (C3) were obtained in the same manner as in Production Example 3-1 except that respective components and the used amounts thereof were changed as shown in Table 4. Further, the results of the physical property evaluation were shown in Table 5.

### [Production Example 3-4]

### Hydrogenated Block Copolymer (C4)

A nitrogen-purged and dried pressure-resistant container was charged with 50 kg of cyclohexane (solvent) dried with molecular sieves A4 and 0.10 kg of cyclohexane solution of sec-butyllithium having a concentration of 10.5% by mass as an anionic polymerization initiator (substantial addition amount of sec-butyllithium: 10.5 g).

After the inside temperature of the pressure-resistant container was raised to 50°C, 1.67 kg of styrene (first time) was added and polymerized for 60 minutes, then the temperature in the container was reduced to 40°C, 0.29 kg of tetrahydrofuran was added as a Lewis base, and then 13.33 kg of isoprene was added over 5 hours, followed by polymerization for 2 hours. After that, the temperature was raised to 50°C, and 1.67 kg of styrene (second time) was added and polymerized for 60 minutes, and methanol was added to stop the reaction to obtain a reaction liquid containing a triblock copolymer of polystyrene-polyisoprene-polystyrene.

A Ziegler-based catalyst formed from nickel octylate and trimethylaluminum (Al/Ni-based Ziegler catalyst) as a hydrogenation catalyst was added to the reaction liquid under a hydrogen atmosphere, and it was reacted at 80°C for 5 hours under a hydrogen pressure of 1 MPa. After the reaction liquid was allowed to cool and depressurized, the Ziegler-based catalyst was removed by washing with water, and vacuum drying was performed to obtain a hydrogenated block copolymer (C4) of a triblock copolymer of polystyrene-polyisoprene-polystyrene.

Respective components and the used amounts thereof were shown in Table 4. Further, the results of the physical property evaluation were shown in Table 5.

### [Production Example 3-5]

### Hydrogenated Block Copolymer (C5)

A nitrogen-purged and dried pressure-resistant container was charged with 50 kg of cyclohexane as a solvent, 227 g of cyclohexane solution of sec-butyllithium having a concentration of 10.5% by mass as an anionic polymerization initiator (substantial addition amount of sec-butyllithium: 23.9 g) and 100 g of tetrahydrofuran as a Lewis base.

After the inside temperature of the pressure-resistant container was raised to 50°C, 7.4 kg of β-farnesene was added and polymerized for 2 hours, and then 3.0 kg of styrene (first time) was added and polymerized for 1 hour, and 4.6 kg of butadiene was further added and polymerized for 1 hour. Subsequently, 100 g of phenyl benzoate was added as a coupling agent to the polymerization reaction liquid, and it was reacted for 1 hour to obtain a reaction liquid containing a poly(β-farnesene)-polystyrene-polybutadiene-polystyrene-poly(β-farnesene) pentablock copolymer.

A Ziegler-based hydrogenation catalyst formed from nickel octylate and trimethylaluminum was added to the reaction liquid under a hydrogen atmosphere, and it was reacted for 5 hours under the conditions of a hydrogen pressure of 1 MPa and 80°C. The reaction liquid was allowed to cool and depressurized, and then washed with water to remove the catalyst, followed by vacuum drying to obtain a hydrogenated product (C5) of the poly(β-farnesene)-polystyrene-polybutadiene-polystyrene-poly(β-farnesene) pentablock copolymer.

Respective components and the used amounts thereof were shown in Table 4. Further, the results of the physical property evaluation were shown in Table 5.

### [Table 1]

**Table 1**

| | | | Production Examples | | | |
|---|---|---|---|---|---|---|
| | | | 1-1 | 1-2 | 1-3 | 1-4 |
| Modified Hydrogenated Product (A) | | | A1 | A2 | A3 | A4 |
| | Cyclohexane | | 50 | 50 | 50 | 50 |
| | sec-butyllithium (10.5% by Mass Cyclohexane Solution) | | 0.07 | 0.07 | 0.09 | 0.20 |
| | (A-1) | Styrene (1) | 1.00 | 1.00 | 1.00 | 1.67 |
| | | Styrene (2) | 1.00 | 1.00 | 1.00 | 1.67 |
| | (A-2) | Isoprene | 8.17 | 8.17 | 14.67 | - |
| | | Butadiene | 6.49 | 6.49 | - | 13.33 |
| Used Amount (kg) | Lewis Base | Tetrahydrofuran | - | - | - | 0.11 |
| | | DTHFP | 0.033 | 0.033 | 0.033 | - |
| | Hydrogenation Catalyst | Al/Ni-Based Ziegler Catalyst | 3.1 | 3.1 | 4.5 | 1.2 |
| | Modification | Hydrogenated Product | 10 | 10 | 10 | 10 |
| | | Maleic Anhydride | 0.1 | 0.15 | 0.1 | 0.2 |
| | | Radical Initiator | 0.01 | 0.05 | 0.01 | 0.1 |

### [Table 2]

**Table 2**

| Modified Hydrogenated Product (A) | A1 | A2 | A3 | A4 |
|---|---|---|---|---|
| Structural Unit of Polymer Block (A-1) | St | St | St | St |
| Components Constituting Polymer Block (A-2) | Ip/Bd | Ip/Bd | Ip | Bd |
| Mass Ratio of Components Constituting Polymer Block (A-2) | 55/45 | 55/45 | 100 | 100 |
| Molar Ratio of Components Constituting Polymer Block (A-2) | 50/50 | 50/50 | 100 | 100 |
| Polymer Structure (Bonding Mode) | A-1/A-2/A-1 | A-1/A-2/A-1 | A-1/A-2/A-1 | A-1/A-2/A-1 |
| Content of Polymer Block (A-1) (% by Mass) | 12 | 12 | 12 | 20 |
| Weight Average Molecular Weight of Polymer Block (A-1) | 8,300 | 8,300 | 6,700 | 5,000 |
| Weight Average Molecular Weight of Polymer Block (A-2) | 208,000 | 208,000 | 143,000 | 77,000 |
| Weight Average Molecular Weight of Modified Hydrogenated Product (A) | 185,000 | 185,000 | 154,000 | 87,000 |
| Hydrogenation Rate in Polymer Block (A-2) (mol%) | 97 | 97 | 91 | 99 |
| Vinyl Bonding Amount in Polymer Block (A-2) (mol%) | 78 | 78 | 83 | 40 |
| Maleic Anhydride Modification Amount (phr) | 0.40 | 0.87 | 0.40 | 1.70 |
| MFR_230°C, 21 N (g/10 minutes) | 12.2 | 15.5 | 20.8 | 5.0 |
| Glass Transition Temperature (°C) | 4 | 4 | 20 | -56 |
| tan δ Peak Top Temperature (°C) | 14.0 | 14.0 | 33.2 | -46.4 |
| tan δ Peak Top Intensity | 2.10 | 2.10 | 2.09 | 0.42 |
| Weight Average Molecular Weight of Modified Hydrogenated Product | 187,000 | 187,000 | 156,000 | 88,500 |

### [Table 3]

**Table 3**

| | | | Production Examples | | | |
|---|---|---|---|---|---|---|
| | | | 2-1 | 2-2 | 2-3 | 2-4 |
| Acrylic-Based Block Copolymer | | | B2 | B3 | B4 | B5 |
| | Step 1 | Toluene | 50 | 50.2 | 46.5 | 53.4 |
| | | 1,2-dimethoxyethane | 0.0998 | 0.0780 | 0.123 | 0.0833 |
| | | Isobutyl bis(2,6-di-t-butyl-4-methylphenoxy) aluminum | 0.82 | 0.641 | 1.23 | 0.635 |
| Used Amount (kg) | | sec-butyllithium (10.5% by Mass Cyclohexane Solution) | 0.121 | 0.0946 | 0.149 | 0.101 |
| | Step 2 | Methyl methacrylate | 1.47 | 1.07 | 1.80 | 1.14 |
| | Step 3 | n-butyl acrylate | 6.33 | 5.12 | 6.06 | 3.0 |
| | | Methyl acrylate | - | 1.28 | - | 1.71 |
| | Step 4 | Methyl methacrylate | 1.20 | 1.52 | 4.14 | 2.40 |
| | Step 5 | Methanol | 0.370 | 0.289 | 0.450 | 0.295 |
| (E1)/(D1) [Mass Ratio] | | | 30/70 | 29/71 | 50/50 | 37/63 |
| Structure of Acrylic-Based Block Copolymer (Bonding Mode) | | | MMA-nBA-MMA | MMA-(nBA/MA)-MMA | MMA-nBA-MMA | MMA-(nBA/MA)-MMA |
| Peak Top Molecular Weight (Mp) | | | 66,000 | 82,000 | 68,000 | 64,000 |
| Molecular Weight Distribution (Mw/Mn) | | | 1.17 | 1.10 | 1.13 | 1.10 |

Each notation in Table 3 is as follows.
MMA-nBA-MMA: methyl methacrylate polymer block - n-butyl acrylate polymer block - methyl methacrylate polymer block
MMA-(nBA/MA)-MMA: methyl methacrylate polymer block - (n-butyl acrylate/methyl acrylate) copolymer block - methyl methacrylate polymer block

### [Table 4]

**Table 4**

| | | | Production Examples | | | | |
|---|---|---|---|---|---|---|---|
| | | | 3-1 | 3-2 | 3-3 | 3-4 | 3-5 |
| Hydrogenated Block Copolymer (C) | | | C1 | C2 | C3 | C4 | C5 |
| | Cyclohexane | | 50 | 50 | 50 | 50 | 50 |
| | sec-butyllithium (10.5% by Mass Cyclohexane Solution) | | 0.03 | 0.05 | 0.17 | 0.10 | 0.23 |
| | (C-1) | Styrene (1) | 1.32 | 1.12 | 5.42 | 1.67 | 3.00 |
| | | Styrene (2) | 1.32 | 1.12 | 5.42 | 1.67 | - |
| | (C-2) | Isoprene | 3.44 | - | 5.83 | 13.33 | - |
| Used Amount (kg) | | Butadiene | 2.73 | - | - | - | 4.60 |
| | | Farnesene | - | 10.25 | - | - | 7.40 |
| | Coupling Agent | Dichlorodimethylsilane | - | - | - | - | - |
| | | Phenyl benzoate | - | - | - | - | 0.10 |
| | Lewis Base | Tetrahydrofuran | - | - | - | 0.29 | 0.10 |
| | Hydrogenation Catalyst | Al/Ni-Based Ziegler Catalyst | 1.2 | 2.2 | 1.5 | 2.2 | 1.7 |

### [Table 5]

**Table 5**

| Hydrogenated Block Copolymer (C) | C1 | C2 | C3 | C4 | C5 |
|---|---|---|---|---|---|
| Structural Unit of Polymer Block (C-1) | St | St | St | St | St |
| Components Constituting Polymer Block (C-2) | Ip/Bd | Far | Ip | Ip | Far, Bd |
| Mass Ratio of Components Constituting Polymer Block (C-2) | 55/45 | 100 | 100 | 100 | 63, 37 |
| Molar Ratio of Components Constituting Polymer Block (C-2) | 50/50 | 100 | 100 | 100 | 30, 70 |
| Polymer Structure (Bonding Mode) | C-1/C-2/C-1 | C-1/C-2/C-1 | C-1/C-2/C-1 | C-1/C-2/C-1 | *1 |
| Content of Polymer Block (C-1) (% by Mass) | 30 | 18 | 65 | 21 | 20 |
| Weight Average Molecular Weight of Polymer Block (C-1) | 25,300 | 14,400 | 20,000 | 10,500 | 8,000 |
| Weight Average Molecular Weight of Polymer Block (C-2) | 220,000 | 142,000 | 33,000 | 118,000 | 41,000 |
| Weight Average Molecular Weight of Hydrogenated Block Copolymer (C) | 289,000 | 171,000 | 74,000 | 109,000 | 100,000 |
| Hydrogenation Rate in Polymer Block (C-2) (mol%) | 99 | 90 | 99 | 90 | 90 |
| Vinyl Bonding Amount in Polymer Block (C-2) (mol%) | 6 | 6 | 6 | 60 | 15 |
| Glass Transition Temperature (°C) | -54 | -55 | -59 | -13 | -52 |
| tan δ Peak Top Temperature (°C) | -49.5 | -50.2 | -55.3 | -7.2 | -48.0 |
| tan δ Peak Top Intensity | 0.39 | 2.20 | 0.09 | 2.19 | 1.30 |

| | | | | | |
|---|---|---|---|---|---|
| * 1: Hydrogenated Product of Poly(β-farnesene)-polystyrene-polybutadiene-polystyrene-poly(β-farnesene) Pentablock Copolymer | | | | | |

### <Examples 1 to 14 and Comparative Examples 1 to 3>

### (1) Preparation of Resin Composition

Respective components and the used amounts thereof were used as shown in Table 6 or 7, and the pre-mixed composition was melt-kneaded using a twin-screw extruder ("ZSK26Mc" manufactured by Coperion GmbH; the number of cylinders: 14) under conditions of 230°C and a screw rotational speed of 200 rpm to obtain a resin composition. Respective physical properties of the obtained resin compositions were evaluated according to the following methods. The evaluation results were shown in Table 6 or 7.

### (2) Production of Multilayer Structure

A multilayer structure was produced by an injection insert molding method using the following adherend (length of 100 mm × width of 35 mm × thickness of 1 mm) as an insert part.

When the adherend was a synthetic resin, both surfaces of the adherend were wiped with gauze impregnated with methanol to degrease the adherend, followed by natural drying.

When the adherend was a metal, both surfaces of the adherend were washed with an aqueous surfactant solution and distilled water in this order, and dried at 100°C.

Each of the adherends pretreated as described above was fixed in the mold by a vacuum line. Under the conditions of a mold temperature of 50°C and a cylinder temperature of 230°C, the mold was filled with the obtained resin composition and a multilayer structure was obtained by cooling the surface temperature of the adherend to 50°C. For the obtained multilayer structures, the adhesive force (peel strength) of the resin composition was evaluated according to the following method. The evaluation results were shown in Table 6 or 7.

Note that details of the adherends used in the production of the multilayer structure are as follows.
· Polycarbonate (PC) plate: trade name "Iupilon S-3000R", manufactured by Mitsubishi Engineering-Plastics Corporation
· Acrylonitrile-butadiene-styrene resin (ABS) plate: trade name "TOYOLAC 700-314", manufactured by Toray Industries, Inc.
· Nylon 6 (PA6) plate: trade name "UBE Nylon 6 1013B", manufactured by UBE Corporation.
· Aluminum alloy (AL) plate: material "A5052P"

### <Evaluation Method>

Details of each evaluation method in Examples and Comparative Examples are as follows.

### [Melt Flow Rate (MFR)]

The outflow rates (g/10 minutes) of the resin compositions obtained in Examples and Comparative Examples were measured in accordance with JIS K 7210:2014 using a melt indexer under conditions of a temperature of 230°C and a load of 21 N.

Note that, in Comparative Example 2, the melt flow rate was less than 0.1 g/10 minutes, which was difficult to measure, and therefore, it was indicated as "<0.1" in Table 6.

### [Hardness and Tensile Properties]

### (1) Preparation of Sheet

Each of the resin compositions obtained in Examples and Comparative Examples was injection-molded using an injection molding apparatus ("EC75SX; 75 ton" manufactured by Toshiba Machine Co., Ltd.) under the conditions of a cylinder temperature of 230°C and a mold temperature of 50°C to produce a sheet having a length of 100 mm, a width of 35 mm, and a thickness of 2 mm.

### (2) Hardness

A dumbbell No. 3 test piece was obtained from the sheet obtained above using a punching blade in accordance with JIS K 6251:2010.

Three of the obtained test pieces were stacked to form into a thickness of 6 mm, and values immediately after measurement (after 0 second), after 3 seconds of measurement, and after 15 seconds of measurement were obtained by a type A durometer method of JIS K 6253-2:2012.

The greater the change in the measured value over time, the easier to obtain good flexibility, elasticity, and mechanical strength, and the easier to exhibit strong adhesive force.

### (3) Tensile Properties

The 100% modulus, tensile strength at break, and tensile elongation at break of the dumbbell No. 3 test piece obtained above were measured in accordance with JIS K 6251:2010.

In all of the 100% modulus, the tensile strength at break, and the tensile elongation at break, the higher the numerical value of the measurement result, the more excellent the tensile properties.

### [Adhesive Force (Peel Strength)]

The multilayer structure obtained in each of Examples and Comparative Examples was subjected to a peeling test under conditions of a peeling angle of 180° and a tensile speed of 200 mm/ minute in accordance with JIS K 6854-2:1999 using "Instron 5566" manufactured by Instron, and the peel strength was measured. The peel strength was calculated as an average value of four times in total.

The higher the numerical value of the peel strength, the higher the adhesive force to the adherend.

### [Table 6]

**Table 6**

| | | | Example 1 | Example 2 | Example 3 | Example 4 | Comparative Example 1 | Comparative Example 2 | Comparative Example 3 |
|---|---|---|---|---|---|---|---|---|---|
| | Modified Hydrogenated Product (A) | (A1) Vinyl Bonding Amount: 78 mol% | 100 | | | | | | |
| | | (A2) Vinyl Bonding Amount: 78 mol% | | 100 | | 100 | | | |
| | | (A3) Vinyl Bonding Amount: 80 mol% | | | 100 | | | | |
| | | (A4) Vinyl Bonding Amount: 40 mol% | | | | | 100 | | |
| | | (A5) Vinyl Bonding Amount: - | | | | | | 100 | |
| | | (A6) Vinyl Bonding Amount: - | | | | | | | 100 |
| | Resin (B) | (B1) Thermoplastic Polyurethane Resin | 200 | 200 | 200 | 200 | 200 | 200 | 200 |
| | | (B2) Acrylic-Based Block Copolymer | | | | | | | |
| Resin Composition (Parts by Mass) | | (B3) Acrylic-Based Block Copolymer | | | | | | | |
| | Hydrogenated Block Copolymer (C) | (C1) Vinyl Bonding Amount: 6 mol% | 100 | 100 | 100 | | 100 | 100 | 100 |
| | | (C2) Vinyl Bonding Amount: 6 mol% | | | | 140 | | | |
| | | (C3) Vinyl Bonding Amount: 6 mol% | | | | | | | |
| | | (C4) Vinyl Bonding Amount: 60 mol% | | | | 60 | | | |
| | Softener | | 100 | 100 | 100 | | 100 | 100 | 100 |
| | Antioxidant | | 0.1 | 0.1 | 0.1 | 0.1 | 0.1 | 0.1 | 0.1 |
| | (A) Component Content Ratio | % by Mass | 20 | 20 | 20 | 20 | 20 | 20 | 20 |

### [Table 6] (Continued)

**Table 6**

| | | | | Example 1 | Example 2 | Example 3 | Example 4 | Comparative Example 1 | Comparative Example 2 | Comparative Example 3 |
|---|---|---|---|---|---|---|---|---|---|---|
| | Melt Flow Rate | 230°C, 21 N | g/10 minutes | 58 | 57 | 72 | 10 | 3 | <0.1 | 12 |
| | Hardness | Type A | After 0 Second | 49 | 49 | 53 | 60 | 60 | 59 | 85 |
| | | | After 3 Seconds | 41 | 40 | 45 | 52 | 57 | 55 | 83 |
| | | | After 15 Seconds | 38 | 37 | 42 | 49 | 55 | 53 | 82 |
| Evaluation | Tensile Properties | 100% Modulus | MPa | 1.4 | 1.4 | 1.5 | 1.9 | 2.1 | 2.0 | 5.2 |
| | | Tensile Strength at Break | MPa | 5.2 | 4.5 | 6.7 | 16.0 | 7.1 | 5.6 | 21.4 |
| | | Tensile Elongation at Break | % | 560 | 540 | 550 | 640 | 570 | 660 | 650 |
| | Adhesive Force Peel Test 200 mm/minute | N/25 mm | PC | 42 | 41 | 45 | 34 | 40 | 39 | 8 |
| | | | ABS | 45 | 46 | 47 | 18 | 18 | 42 | 8.3 |
| | | | PA6 | 35 | 26 | 25 | 30 | 32 | 23 | 0 |
| | | | AL | 7.8 | 16 | 15 | 28 | 0.6 | 1.8 | 0 |

### [Table 7]

**Table 7**

| | | | Example 5 | Example 6 | Example 7 | Example 8 | Example 9 | Example 10 | Example 11 | Example 12 | Example 13 | Example 14 |
|---|---|---|---|---|---|---|---|---|---|---|---|---|
| | Modified Hydrogenated Product (A) | (A1) Vinyl Bonding Amount: 78 mol% | | | | | | | | | | |
| | | (A2) Vinyl Bonding Amount: 78 mol% | 100 | 100 | 100 | 100 | 100 | 100 | 100 | 100 | 100 | 100 |
| | | (A3) Vinyl Bonding Amount: 80 mol% | | | | | | | | | | |
| | | (A4) Vinyl Bonding Amount: 40 mol% | | | | | | | | | | |
| | | (A5) Vinyl Bonding Amount: - | | | | | | | | | | |
| | | (A6) Vinyl Bonding Amount: - | | | | | | | | | | |
| Resin Composition (Parts by Mass) | Resin (B) | (B1) Thermoplastic Polyurethane Resin | | | | | | | | | | |
| | | (B2) Acrylic-Based Block Copolymer | 200 | 400 | 200 | | | | | | | |
| | | (B3) Acrylic-Based Block Copolymer | | | | 400 | 100 | 200 | 400 | 667 | 200 | 100 |
| | Hydrogenated Block Copolymer (C) | (C1) Vinyl Bonding Amount: 6 mol% | 100 | | | | | | | | | |
| | | (C2) Vinyl Bonding Amount: 6 mol% | | 200 | 200 | 200 | 100 | 200 | 400 | 667 | 140 | |
| | | (C3) Vinyl Bonding Amount: 6 mol% | | | | | | | | | 60 | |
| | | (C4) Vinyl Bonding Amount: 60 mol% | | | | | | | | | | |
| | Softener | | 100 | | | | | | | | | |
| | Antioxidant | | 0.1 | 0.1 | 0.1 | 0.1 | 0.1 | 0.1 | 0.1 | 0.1 | 0.1 | 0.1 |
| | (A) Component Content Ratio | % by Mass | 20 | 14 | 20 | 14 | 33 | 20 | 11 | 7 | 20 | 50 |

### [Table 7] (Continued)

**Table 7**

| | | | | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|
| | Melt Flow Rate | 230°C, 21 N | g/10 minutes | 127 | 96 | 56 | 88 | 37 | 49 | 48 | 54 | 37 | 134 |
| | Hardness | Type A | After 0 Second | 44 | 55 | 48 | 55 | 52 | 49 | 47 | 47 | 66 | 76 |
| | | | After 3 Seconds | 33 | 41 | 32 | 38 | 32 | 32 | 31 | 31 | 49 | 51 |
| | | | After 15 Seconds | 29 | 36 | 28 | 33 | 26 | 27 | 27 | 27 | 44 | 43 |
| Evaluation | Tensile Properties | 100% Modulus | MPa | 1.0 | 1.3 | 0.9 | 1.0 | 0.8 | 0.8 | 0.7 | 0.7 | 1.8 | 1.6 |
| | | Tensile Strength at Break | MPa | 2.5 | 7.0 | 5.2 | 9.2 | 5.4 | 7.0 | 7.2 | 7.2 | 8.3 | 7.6 |
| | | Tensile Elongation at Break | % | 570 | 640 | 620 | 580 | 520 | 590 | 700 | 670 | 520 | 550 |
| | Adhesive Force Peel Test 200 mm/minute | N/25 mm | PC | 24 | 41 | 18 | 47 | 33 | 60 | 62 | 52 | 60 | 56 |
| | | | ABS | 28 | 45 | 14 | 53 | 30 | 38 | 41 | 41 | 21 | 58 |
| | | | PA6 | 15 | 29 | 7 | 15 | 17 | 10 | 8 | 6 | 12 | 14 |
| | | | AL | 34 | 34 | 53 | 40 | 51 | 59 | 49 | 40 | 50 | 57 |

"(A) Component Content Ratio" in Tables 6 and 7 means the content ratio (% by mass) of the modified hydrogenated product (A) in 100% by mass of the resin composition.

In Table 6, when Examples 1 to 3 and Comparative Examples 1 to 3 in which only the kind of the modified hydrogenated product (A) was different were compared, it is understood that Examples 1 to 3 exhibited excellent flexibility and molding processability, and were excellent in tensile properties. In addition, it is understood that Examples 1 to 3 had higher peel strength to aluminum, specifically aluminum alloy, than Comparative Examples 1 to 3. Therefore, it is understood that Examples 1 to 3 exhibited strong adhesive force to both the synthetic resin and the metal even when injection molding was performed under a low temperature condition of about 230°C. In addition, it is understood from Example 4 that even when two or more kinds of hydrogenated block copolymers (C) were used, excellent tensile properties and strong adhesive force to both of the synthetic resin and the metal were exhibited.

In Table 7, it is understood that Examples 5 to 14 exhibited excellent flexibility and molding processability, and were excellent in tensile properties. In addition, it is understood that, in Examples 5 to 14, even when injection molding was performed under a low temperature condition of about 230°C, strong adhesive force was exhibited to both the synthetic resin and the metal. In addition, from Example 13, it is understood that even when two or more kinds of hydrogenated block copolymers (C) are used, excellent tensile properties and strong adhesive force are obtained. In addition, from Example 14, it is understood that when the resin composition contains the modified hydrogenated product (A) and the resin (B), excellent tensile properties and strong adhesive force are obtained.

### <Examples 15 to 18>

### (1) Preparation of Resin Composition

Respective components and the used amounts thereof were used as shown in Table 8, and the pre-mixed composition was melt-kneaded using the above-mentioned twin-screw extruder "ZSK26Mc" under the conditions of 230°C and a screw rotational speed of 200 rpm to obtain a resin composition. Respective physical properties of the obtained resin compositions were evaluated according to the following methods. The evaluation results were shown in Table 8.

### (2) Production of Multilayer Structure

A multilayer structure was produced by an injection insert molding method using the following adherend (length of 100 mm × width of 35 mm × thickness of 1 mm) as an insert part. Regarding the adherend, the pretreated adherend was prepared in the same manner as mentioned above.

Each of the adherends was fixed in the mold by a vacuum line. Under the conditions of a mold temperature of 50°C and respective cylinder temperatures of 230°C and 250°C, the mold was filled with the obtained resin composition, and a multilayer structure was obtained by cooling the surface temperature of the adherend to 50°C. For the obtained multilayer structures, the adhesive force (peel strength) of the resin composition was evaluated according to the following method. The evaluation results were shown in Table 8.

Note that details of the adherends used in the production of the multilayer structure are as follows.
· Polycarbonate (PC) plate: trade name "Iupilon S-3000R", manufactured by Mitsubishi Engineering-Plastics Corporation
· Acrylonitrile-butadiene-styrene resin (ABS) plate: trade name "TOYOLAC 700-314", manufactured by Toray Industries, Inc.
· Polypropylene (PP) plate: trade name "Prime Polypro J106G", manufactured by Prime Polymer Co., Ltd.
· Nylon 6 (PA6) plate: trade name "UBE Nylon 6 1013B", manufactured by UBE Corporation · Aluminum alloy (AL) plate: material "A5052P"
· Stainless steel (SUS) plate: material "SUS304"

### <Evaluation Method>

Details of each evaluation method in Examples and Comparative Examples are as follows.

### [Melt Flow Rate (MFR)]

The outflow rate (g/10 minutes) was measured in the same method under the same conditions as in the method and the conditions described in the previous section [Melt Flow Rate (MFR)].

### [Hardness and Tensile Properties]

### (1) Preparation of Sheet

Each of the resin compositions obtained in Examples 15 to 18 was injection-molded using the above-mentioned injection molding apparatus "EC75SX" under the conditions of a mold temperature of 50°C and respective cylinder temperatures of 230°C and 250°C, to produce a sheet having a length of 100 mm, a width of 35 mm, and a thickness of 2 mm.

### (2) Hardness

A dumbbell No. 3 test piece was obtained from the sheet obtained above using a punching blade in accordance with JIS K 6251:2010.

Three of the obtained test pieces were stacked to form into a thickness of 6 mm, and values immediately after measurement (after 0 second), after 3 seconds of measurement, and after 15 seconds of measurement were obtained by a type A durometer method of JIS K 6253-2:2012.

### (3) Tensile Properties

The 100% modulus, tensile strength at break, and tensile elongation at break of the dumbbell No. 3 test piece obtained above were measured in accordance with JIS K 6251:2010.

### [Adhesive Force (Peel Strength)]

The multilayer structure obtained in each of Examples 15 to 18 was subjected to a peel test using the above-mentioned "Instron 5566" in accordance with JIS K 6854-2:1999 under the conditions of a peel angle of 180° and a tensile speed of 200 mm/minute, and the peel strength was measured. The peel strength was calculated as an average value of four times in total.

### [Table 8]

**Table 8**

| | | | Example 15 | | Example 16 | | Example 17 | | Example 18 | |
|---|---|---|---|---|---|---|---|---|---|---|
| | Modified Hydrogenated Product (A) | (A1) Vinyl Bonding Amount: 78 mol% | | | | | | | | |
| | | (A2) Vinyl Bonding Amount: 78 mol% | 100 | | 100 | | 100 | | 100 | |
| | | (A3) Vinyl Bonding Amount: 80 mol% | | | | | | | | |
| | | (A4) Vinyl Bonding Amount: 40 mol% | | | | | | | | |
| | | (A5) Vinyl Bonding Amount: - | | | | | | | | |
| | | (A6) Vinyl Bonding Amount: - | | | | | | | | |
| | Resin (B) | (B1) Thermoplastic Polyurethane Resin | | | | | | | | |
| | | (B2) Acrylic-Based Block Copolymer | 200 | | | | | | | |
| Resin Composition (Parts by Mass) | | (B3) Acrylic-Based Block Copolymer | | | 200 | | | | 200 | |
| | | (B4) Acrylic-Based Block Copolymer | | | | | 200 | | | |
| | Hydrogenated Block Copolymer (C) | (C1) Vinyl Bonding Amount: 6 mol% | | | | | | | | |
| | | (C2) Vinyl Bonding Amount: 6 mol% | 200 | | 200 | | 200 | | 140 | |
| | | (C3) Vinyl Bonding Amount: 6 mol% | | | | | | | 60 | |
| | | (C4) Vinyl Bonding Amount: 60 mol% | | | | | | | | |
| | Softener | | | | | | | | | |
| | Antioxidant | | 0.1 | | 0.1 | | 0.1 | | 0.1 | |
| | (A) Component Content Ratio | % by Mass | 20 | | 20 | | 20 | | 20 | |

| | | | | Example 15 | | Example 16 | | Example 17 | Example 18 | |
|---|---|---|---|---|---|---|---|---|---|---|
| | Melt Flow Rate | 230°C, 21 N | g/10 minutes | 56 | | 49 | | 15 | 37 | |
| | Cylinder Temperature | °C | | 230 | 250 | 230 | 250 | 250 | 230 | 250 |
| | Hardness | Type A | After 0 Second | 48 | 47 | 49 | 47 | 85 | 66 | 63 |
| | | | After 3 Seconds | 32 | 31 | 32 | 29 | 78 | 49 | 46 |
| | | | After 15 Seconds | 28 | 27 | 27 | 24 | 75 | 44 | 40 |
| | Tensile Properties | 100% Modulus | MPa | 0.9 | 0.9 | 0.8 | 0.8 | 6 | 1.8 | 1.7 |
| Evaluation | | Tensile Strength at Break | MPa | 5.2 | 5.6 | 7.0 | 7.7 | 8.3 | 8.3 | 8.2 |
| | | Tensile Elongation at Break | % | 620 | 710 | 590 | 710 | 270 | 520 | 610 |
| | Adhesive Force Peel Test 200 mm/minute | N/25 mm | PC | 18 | 47 | 60 | 77 | 41 | 60 | 79 |
| | | | ABS | 14 | 39 | 38 | 76 | 48 | 21 | 70 |
| | | | PP | 19 | 18 | 27 | 26 | 29 | 54 | 41 |
| | | | PA6 | 6.8 | 9.8 | 10 | 10 | 34 | 12 | 24 |
| | | | AL | 53 | 72 | 59 | 71 | 77 | 50 | 96 |
| | | | SUS | 69 | 59 | 58 | 57 | 14 | 31 | 42 |

"(A) Component Content Ratio" in Table 8 means the content ratio (% by mass) of the modified hydrogenated product (A) in 100% by mass of the resin composition.

In Table 8, it is understood that Examples 15 to 18 exhibited sufficient tensile properties and strong adhesive force to both the synthetic resin and the metal (for example, aluminum alloy and stainless steel), and particularly, when injection molding under a condition of 250°C was performed, the adhesive force tended to improve. Therefore, it is understood that, in Examples 15 to 18, even when injection molding was performed at any temperature of 230°C and 250°C, excellent flexibility and molding processability were exhibited, and both excellent tensile properties and strong adhesive force were achieved.

### <Examples 19 to 23 and Comparative Example 4>

### (1) Preparation of Resin Composition

Respective components and the used amounts thereof were used as shown in Table 9, and the pre-mixed composition was melt-kneaded using the above-mentioned twin-screw extruder "ZSK26Mc" under the conditions of 230°C and a screw rotational speed of 200 rpm to obtain a resin composition. Respective physical properties of the obtained resin compositions were evaluated according to the following methods. The evaluation results were shown in Table 9.

### (2) Production of Multilayer Structure

A multilayer structure was produced by an injection insert molding method using the following adherend (length of 100 mm × width of 35 mm × thickness of 1 mm) as an insert part. Regarding the adherend, the pretreated adherend was prepared in the same manner as mentioned above.

Each of the adherend was fixed in the mold by a vacuum line. Under the conditions of a mold temperature of 50°C and a cylinder temperature of 230°C, the mold was filled with the obtained resin composition and a multilayer structure was obtained by cooling the surface temperature of the adherend to 50°C. For the obtained multilayer structures, the adhesive force (peel strength) of the resin composition was evaluated according to the following method. The evaluation results were shown in Table 9.

Note that details of the adherends used in the production of the multilayer structure are as follows.
· Polycarbonate (PC) plate: trade name "Iupilon S-3000R", manufactured by Mitsubishi Engineering-Plastics Corporation
· Acrylonitrile-butadiene-styrene resin (ABS) plate: trade name "TOYOLAC 700-314", manufactured by Toray Industries, Inc.
· Polypropylene (PP) plate: trade name "Prime Polypro J106G", manufactured by Prime Polymer Co., Ltd.
· Nylon 6 (PA6) plate: trade name "UBE Nylon 6 1013B", manufactured by UBE Corporation · Aluminum alloy (AL) plate: material "A5052P"
· Stainless steel (SUS) plate: material "SUS304"

### <Evaluation Method>

Details of each evaluation method in Examples and Comparative Examples are as follows.

### [Melt Flow Rate (MFR)]

The outflow rate (g/10 minutes) was measured in the same method and under the same conditions as in the method and the conditions described in the previous section [Melt Flow Rate (MFR)].

### [Hardness and Tensile Properties]

### (1) Preparation of Sheet

Each of the resin compositions obtained in Examples 19 to 23 and Comparative Example 4 was injection-molded using the above-mentioned injection molding apparatus "EC75SX" under the conditions of a mold temperature of 50°C and a cylinder temperature of 230°C to produce a sheet having a length of 100 mm, a width of 35 mm, and a thickness of 2 mm.

### (2) Hardness

A dumbbell No. 3 test piece was obtained from the sheet obtained above using a punching blade in accordance with JIS K 6251:2010.

Three of the obtained test pieces were stacked to form into a thickness of 6 mm, and values immediately after measurement (after 0 second), after 3 seconds of measurement, and after 15 seconds of measurement were obtained by a type A durometer method of JIS K 6253-2:2012.

### (3) Tensile Properties

The 100% modulus, tensile strength at break, and tensile elongation at break of the dumbbell No. 3 test piece obtained above were measured in accordance with JIS K 6251:2010.

### [Adhesive Force (Peel Strength)]

The multilayer structure obtained in each of Examples 19 to 23 and Comparative Example 4 was subjected to a peel test using the above-mentioned "Instron 5566" in accordance with JIS K 6854-2:1999 under the conditions of a peel angle of 180° and a tensile speed of 200 mm/minute, and the peel strength was measured. The peel strength was calculated as an average value of four times in total.

### [Table 9]

**Table 9**

| | | | Example 19 | Example 20 | Example 21 | Example 22 | Example 23 | Comparative Example 4 | |
|---|---|---|---|---|---|---|---|---|---|
| | Modified Hydrogenated Product (A) | (A1) Vinyl Bonding Amount: 78 mol% | | | | | | | |
| | | (A2) Vinyl Bonding Amount: 78 mol% | 100 | 100 | 100 | 100 | 100 | | |
| | | (A3) Vinyl Bonding Amount: 80 mol% | | | | | | | |
| | | (A4) Vinyl Bonding Amount: 40 mol% | | | | | | 100 | |
| | | (A5) Vinyl Bonding Amount: - | | | | | | | |
| | | (A6) Vinyl Bonding Amount: - | | | | | | | |
| | Resin (B) | (B1) Thermoplastic Polyurethane Resin | | | | | | | |
| Resin Composition (Parts by Mass) | | (B2) Acrylic-Based Block Copolymer | | | | | | | |
| | | (B3) Acrylic-Based Block Copolymer | | 200 | | | | | |
| | | (B4) Acrylic-Based Block Copolymer | | | | | | | |
| | | (B5) Acrylic-Based Block Copolymer | 200 | | 200 | 200 | 200 | 200 | |
| | | (C1) Vinyl Bonding Amount: 6 mol% | | | | | | | |
| | | (C2) Vinyl Bonding Amount: 6 mol% | 200 | 100 | 140 | | | 100 | |
| | | (C3) Vinyl Bonding Amount: 6 mol% | | 100 | 60 | | 60 | | |
| | | (C4) Vinyl Bonding Amount: 60 mol% | | | | | | | |
| | | (C5) Vinyl Bonding Amount: 30 mol% | | | | 200 | 140 | | |
| | Softener | | | | | | | | |
| | Antioxidant | | 0.1 | 0.1 | 0.1 | 0.1 | 0.1 | 0.1 | |
| | (A) Component Content Ratio | % by Mass | 20 | 20 | 20 | 20 | 20 | 20 | |

| | | | | Example 19 | Example 20 | Example 21 | Example 22 | Example 23 | Comparative Example 4 |
|---|---|---|---|---|---|---|---|---|---|
| | Melt Flow Rate | 230°C, 21 N | g/10 minutes | 40 | 36 | 35 | 68 | 25 | 9 |
| | Cylinder Temperature | °C | | 230 | 230 | 230 | 230 | 230 | 230 |
| | Hardness | Type A | After 0 Second | 69 | 78 | 79 | 69 | 78 | 69 |
| | | | After 3 Seconds | 52 | 65 | 66 | 53 | 65 | 57 |
| | | | After 15 Seconds | 45 | 60 | 60 | 47 | 59 | 52 |
| | Tensile Properties | 100% Modulus | MPa | 1.8 | 2.4 | 2.9 | 2.2 | 2.6 | 2.1 |
| Evaluation | | Tensile Strength at Break | MPa | 8 | 9.5 | 8.8 | 6.5 | 10 | 8.3 |
| | | Tensile Elongation at Break | % | 500 | 510 | 440 | 410 | 470 | 530 |
| | Adhesive Force Peel Test 200 mm/minute | N/25 mm | PC | 67 | 79 | 83 | 84 | 69 | 45 |
| | | | ABS | 52 | 57 | 40 | 60 | 72 | 30 |
| | | | PP | 45 | 24 | 58 | 53 | 20 | 5.0 |
| | | | PA6 | 28 | 21 | 14 | 36 | 28 | 6.0 |
| | | | AL | 73 | 69 | 15 | 58 | 61 | 12 |
| | | | SUS | 39 | 20 | 9.4 | 18 | 18 | 2.7 |

"(A) Component Content Ratio" in Table 9 means the content ratio (% by mass) of the modified hydrogenated product (A) in 100% by mass of the resin composition.

In Table 9, it is understood that Examples 19 to 23 exhibited sufficient tensile properties and strong adhesive force to both the synthetic resin and the metal (for example, aluminum alloy and stainless steel). It is understood that Comparative Example 4 did not exhibit strong adhesive force to the synthetic resin and the metal (particularly, stainless steel) as compared to Examples 19 to 23.

### Industrial Applicability

The resin composition of the present embodiment is excellent in tensile properties and has a strong adhesive force to a synthetic resin, a metal, and the like. Therefore, the multilayer structure to which the resin composition of the present embodiment is adhered can be used as a part of an impact mitigation material, a covering material having an anti-slip function, a waterproof material, a design material, and the like, which are adhered to a housing of, for example, a large display, a laptop computer, a portable phone, a portable information terminal, an electronic dictionary, a video camera, a digital still camera, a portable radio cassette player, an inverter, a power tool, and the like.

## Claims

1. A resin composition comprising: a modified hydrogenated product (A) of a block copolymer comprising a polymer block (A-1) having a structural unit derived from an aromatic vinyl compound and a polymer block (A-2) having a structural unit derived from a conjugated diene compound, and a resin (B),
wherein the modified hydrogenated product (A) has at least one functional group selected from the group consisting of a carboxy group, an amino group, a hydroxy group, and an acid anhydride-derived group, and the polymer block (A-2) has a vinyl bonding amount of 50 to 99 mol%,
the resin (B) is at least one selected from the group consisting of an acrylic-based block copolymer and a thermoplastic polyurethane resin,
a mass ratio (A)/(B) of the modified hydrogenated product (A) to the resin (B) is 90/10 to 10/90, and
a melt flow rate measured under conditions of a temperature of 230°C and a load of 21 N in accordance with JIS K7210:2014 is 5 g/10 minutes or more.

2. The resin composition according to Claim 1, further comprising a hydrogenated block copolymer (C) comprising a polymer block (C-1) containing a structural unit derived from an aromatic vinyl compound and a polymer block (C-2) containing a structural unit derived from a conjugated diene compound.

3. The resin composition according to Claim 2, wherein the polymer block (C-2) has a vinyl bonding amount of 1 to 85 mol%.

4. The resin composition according to Claim 2 or 3, wherein a hydrogenation rate of a carbon-carbon double bond in the polymer block (C-2) is 80 to 100 mol%.

5. The resin composition according to any one of Claims 2 to 4, wherein the conjugated diene compound in the polymer block (C-2) contains at least one selected from the group consisting of isoprene, butadiene, and farnesene.

6. The resin composition according to any one of Claims 2 to 5, wherein a content ratio of the polymer block (C-1) in the hydrogenated block copolymer (C) is 5 to 70% by mass.

7. The resin composition according to any one of Claims 1 to 6, wherein a content of the functional group with respect to the modified hydrogenated product (A) is 0.10 to 5.00 phr.

8. The resin composition according to any one of Claims 1 to 7, wherein a hydrogenation rate of a carbon-carbon double bond in the polymer block (A-2) is 80 to 100 mol%.

9. The resin composition according to any one of Claims 1 to 8, wherein a content ratio of the structural unit derived from isoprene in the polymer block (A-2) is 30% by mass or more.

10. The resin composition according to any one of Claims 1 to 9, wherein the conjugated diene compound in the polymer block (A-2) contains isoprene and butadiene.

11. The resin composition according to any one of Claims 1 to 10, wherein a content ratio of the polymer block (A-1) in the modified hydrogenated product (A) is 5 to 40 % by mass.

12. The resin composition according to any one of Claims 2 to 6, comprising 5 to 200 parts by mass of a softener with respect to 100 parts by mass of the hydrogenated block copolymer (C).

13. The resin composition according to Claim 12, wherein the softener is at least one selected from the group consisting of a paraffine-based process oil, a naphthene-based process oil, and an aromatic-based process oil.

14. A molded body comprising the resin composition according to any one of Claims 1 to 13.

15. A multilayer structure comprising: a layer formed of the resin composition according to any one of Claims 1 to 13; and a layer formed of a material other than the resin composition.

16. The multilayer structure according to Claim 15, wherein the other material is at least one selected from the group consisting of a synthetic resin and a metal.

17. A method for producing the multilayer structure according to Claim 15 or 16, comprising injection insert molding of the resin composition to the layer formed of the other material than the resin composition.
